# EUROPEAN PATENT APPLICATION

(11) **EP 2 177 571 A1**
(43) Date of publication of application: **21.04.2010**
(21) Application number: 08778150.6
(22) Date of filing: 14.07.2008
(51) Int. Cl.: C08L 101/10, C08K 3/26, C08K 5/31, C08K 5/544, C08K 5/57, C08L 71/02, C09J 201/10, C09K 3/10

(54) **CURABLE COMPOSITION**

(30) Priority: 19.07.2007 JP 2007187805
(71) Applicant: Kaneka Corporation, Kita-ku Osaka-shi, Osaka 530-8288 (JP)
(72) Inventor: YANO, Ayako, Takasago-shi Hyogo 676-0027 (JP)
(74) Representative: TBK-Patent
(86) International application number: PCT/JP2008/062679
(87) International publication number: WO 2009/011329

(57) **Abstract**

An object of the present invention is to provide a curable composition which has good curability and good tensile properties (high elongation), and contains a smaller amount of a dibutyltin compound which is regarded as toxic. The curable composition of the present invention comprises the following components (A) and (B) at a weight ratio of (A)/(B) of 25/75 to 75/25, (A) a reactive silyl group-containing organic polymer having, as a silicon-containing group cross-linkable by siloxane bond formation, a group represented by the formula (1): -SiX₃, and (B) a reactive silyl group-containing organic polymer having, as a silicon-containing group cross-linkable by siloxane bond formation, a moiety represented by the formula (2):

-O-R^{l}-CH(CH₃)-CH₂-Si(R²₃₋ₐ)Xₐ

- wherein a is 1 or 2.

## Description

### TECHNICAL FIELD

The present invention relates to a curable composition comprising one or more organic polymers having a silicon-containing group which has a hydroxyl group or hydrolyzable group bonded to a silicon atom and can form a siloxane bond to be crosslinked (hereinafter referred to also as a "reactive silyl group").

### BACKGROUND ART

Organic polymers containing at least one reactive silyl group in the molecule are known to have properties such that they are cross-linkable by siloxane bond formation accompanied by reactions such as hydrolysis of a reactive silyl group due to moisture and the like, even at room temperature, to provide rubber-like cured products.

Patent Document 1 and other documents disclose these reactive silyl group-containing organic polymers. These polymers have been industrially produced and used in various applications such as sealants, adhesives, and coatings. In particular, industrial sealants are required to rapidly cure, and cured products thereof are required to have high strength and high elongation; this requires challenging polymer design. For example, surface curability may be improved by increasing the introduction rate of a reactive silyl group into an organic polymer.

So far, the most widely used reactive silyl group-containing organic polymers are polyoxyalkylene polymers having a methyldimethoxysilyl group or a like dialkoxysilyl group. Room temperature-curable compositions containing such a polymer are produced at a relatively low cost, and are excellent in mechanical properties and storage stability.

Polyoxyalkylene polymers having a methyldimethoxysilyl group are generally produced as follows: an allyl group is introduced into each polymer end; and the polymer is hydrosilylated with methyldimethoxysilane to introduce a reactive silyl group thereinto. In this case, about 20% of the polymer end groups are isomerized to isopropenyl groups upon allyl group introduction. Thus, the introduction rate of a reactive silyl group has a ceiling of 80%.

Patent Documents 2 and 3 disclose techniques for solving the aforementioned problem. In the techniques, a methallyl group is used instead of an allyl group to suppress isomerization and increase the introduction rate of a reactive silyl group, thereby increasing the strength and elongation of cured products. Here, steric hindrance occurs due to a methyl group around the silyl group, and this causes poor surface curability; much more improvement is therefore required for the use as industrial sealants. Although such poor surface curability can be improved if a larger amount of a dialkyltin compound, which serves as a curing catalyst, is used, the improvement effects are insufficient. Further, dialkyltin compounds have been recently regarded as toxic, and it is undesirable to use a larger amount of a dialkyltin compound.

Patent Document 4 and other documents disclose polyoxyalkylene polymers having a trimethoxysilyl group or a like trialkoxysilyl group, and also disclose that such polymers can provide rapidly-curable compositions. Here, it is known that, although trialkoxysilyl group-containing polyoxyalkylene polymers are excellent in rapid curability, cured products to be provided therefrom have poor tensile strength and elongation.

Patent Document 5 discloses a curable composition having a trialkoxysilyl group-containing polyoxyalkylene polymer and a dialkoxysilyl group-containing polyoxyalkylene polymer together. This curable composition can achieve excellent tensile properties (strength and elongation), rapid curability, and storage stability. Here, as mentioned above, the dialkoxysilyl group-containing polyoxyalkylene polymer has 80% or less of the introduction rate of a reactive silyl group into the ends and, thus, the resulting cured product has still insufficient strength and elongation.

Curable compositions containing such a reactive silyl group-containing polyoxyalkylene polymer are cured in the presence of a silanol condensation catalyst. In the case of a one-pack type curable composition, dibutyltin type catalysts, such as dibutyltin bis(acetylacetonate), have been widely used. However, as mentioned above, dialkyltin compounds have been recently regarded as toxic, and it is desirable to reduce an amount thereof and use other curing catalysts than dialkyltin compounds.
Patent Document 1: Japanese Kokai Publication S52-73998
Patent Document 2: WO99/24489
Patent Document 3: Japanese Kokai Publication 2000-319642
Patent Document 4: Japanese Kokai Publication H11-21463
Patent Document 5: Japanese Kokai Publication H10-245484

### SUMMARY OF THE INVENTION

An object of the present invention is to provide a curable composition which mainly contains a reactive silyl group-containing organic polymer, and which can achieve good surface curability and good tensile properties (high strength and high elongation) together. Another object of the present invention is to provide a curable composition that contains a smaller amount of a dialkyltin compound or contains no dialkyltin compound, which is regarded as harmful to the environment.

The present inventor has made intensive investigations to solve the aforementioned problems and, as a result, found it possible to provide a curable composition that can achieve rapid surface curability, high strength, and high elongation together by combining the following organic polymers (A) and (B): the organic polymer (A) having a reactive silyl group in which three hydroxy groups or hydrolyzable groups are bound to one silicon atom; and the organic polymer (B) having an increased introduction rate of a reactive silyl group in which two hydroxy groups or hydrolyzable groups are bound to one silicon atom. Based on such findings, the present invention has been completed.

The present invention relates to the following (I) to (XX).
(I): A curable composition comprising the following components (A) and (B) at a weight ratio of (A)/(B) of 25/75 to 75/25,
   (A) a reactive silyl group-containing organic polymer having, as a silicon-containing group cross-linkable by siloxane bond formation, a group represented by the formula (1):

      -SiX₃ (1)

      wherein X is a hydroxy group or a hydrolyzable group, and each of the three Xs may be the same as or different from one another; and
   (B) a reactive silyl group-containing organic polymer having, as a silicon-containing group cross-linkable by siloxane bond formation, a moiety represented by the formula (2):

      -O-R¹-CH(CH₃)-CH₂-Si(R²₃₋ₐ)Xₐ (2)
   wherein R¹ is a C₁-C₂₀ bivalent organic group containing, as a constituent atom, at least one selected from the group consisting of hydrogen, carbon, and nitrogen; R² is a C₁-C₂₀ alkyl group, a C₆-C₂₀ aryl group, a C₇-C₂₀ aralkyl group, or a triorganosiloxy group represented by -OSi(R')3, wherein R' is a C₁-C₂₀ monovalent hydrocarbon group and each of the three R's may be the same as or different from one another; X is a hydroxy group or a hydrolyzable group, and in the case two or more Xs exist, the Xs may be the same as or different from each other; and a is 1 or 2.
(II): The curable composition according to (I), wherein 85% or more of terminal moieties of the organic polymer (B) are the reactive silyl groups of the formula (2).
(III): The curable composition according to (I) or (II), wherein the silicon-containing group of the organic polymer (A) is represented by the formula (3):

   -O-R³-SiX₃ (3)

   wherein R³ is a C₁-C₆ bivalent hydrocarbon group; and X is as defined above, and each of the three Xs may be the same as or different from one another.
(IV): The curable composition according to (I) or (II), wherein the silicon-containing group of the organic polymer (A) is represented by the formula (4):

   -C(=O)-NR⁴-R³-SiX₃ (4)

   wherein R³ is as defined above; R⁴ is a C₁-C₂₀ hydrocarbon group; and X is as defined above, and each of the three Xs may be the same as or different from one another.
(V): The curable composition according to any one of (I) to (IV), wherein the silicon-containing group of the organic polymer (A) is located at the polymer end.
(VI): The curable composition according to any one of (I) to (V), wherein R¹ in the formula (2) is CH₂.
(VII): The curable composition according to any one of (I) to (VI), wherein a in the formula (2) is 2.
(VIII): The curable composition according to any one of (I) to (VII), wherein the organic polymer (B) contains a polyoxyalkylene and/or vinyl polymer as a main chain skeleton.
(IX): The curable composition according to any one of (I) to (VIII), wherein the organic polymer (A) contains a polyoxyalkylene and/or vinyl polymer as a main chain skeleton.
(X): The curable composition according to any one of (I) to (IX), wherein the organic polymers (A) and/or (B) contain, as a main chain skeleton, a polyoxyalkylene polymer polymerized in the presence of a double metal cyanide complex catalyst.
(XI): The curable composition according to any one of (I) to (X), wherein the organic polymer (B) has a number average molecular weight (Mn) of 16,500 to 50,000.
(XII): The curable composition according to any one of (I) to (XI), further comprising
   (C) a dialkyltin compound having a C₁-C₈ alkyl group in an amount of less than 0.5% by weight to the total amount of the curable composition.
(XIII): The curable composition according to (XII), wherein the dialkyltin compound (C) is a dibutyltin compound.
(XIV): The curable composition according to (XII), wherein the dialkyltin compound (C) is a dioctyltin compound.
(XV): The curable composition according to any one of (I) to (XIV), further comprising
   (D) an amidine compound in an amount of 0.1 to 5% by weight to the total amount of the curable composition.
(XVI): The curable composition according to any one of (I) to (XV), further comprising
   (E) a silane coupling agent having an amino group.
(XVII): The curable composition according to any one of (I) to (XVI), further comprising
   (F) a colloidal calcium carbonate.
(XVIII): A sealant, which is produced from the curable composition according to any one of (I) to (XVII).
(XIX): An adhesive, which is produced from the curable composition according to any one of (I) to (XVII).
(XX): A waterproof material, which is produced from the curable composition according to any one of (I) to (XVII).

The curable composition of the present invention is excellent in surface curability and tensile properties (high strength and high elongation). Further, the present invention can exert the above excellent physical properties even in the case where the curable composition contains a smaller amount of a dialkyltin compound or contains no dialkyltin compound, which is regarded as harmful to the environment.

### BEST MODE FOR CARRYING OUT THE INVENTION

The following will specifically describe the present invention.
The curable composition of the present invention essentially contains an organic polymer (A), which has a reactive silyl group with three hydroxy groups or hydrolyzable groups bound to one silicon atom thereof, and an organic polymer (B) having a reactive silyl group with a specific structure.

Each of the reactive silyl groups contained in the organic polymers (A) and (B) of the present invention has a silicon atom-bound hydroxy group or a silicon atom-bound hydrolyzable group, and is cross-linkable by siloxane bond formation due to a reaction accelerated by a silanol condensation catalyst.

The reactive silyl group of the component (A) is represented by the formula (1):

-SiX₃ (1)

wherein X is a hydroxy group or a hydrolyzable group, and each of the three Xs may be the same as or different from one another.

The reactive silyl group of the component (B) is represented by the formula (2):

-O-R¹-CH(CH₃)-CH₂-Si(R²₃₋ₐ)Xₐ (2)

wherein R¹ is a C₁-C₂₀ bivalent organic group containing, as a constituent atom, at least one selected from the group consisting of hydrogen, carbon, and nitrogen; R² is a C₁-C₂₀ alkyl group, a C₆-C₂₀ aryl group, a C₇-C₂₀ aralkyl group, or a triorganosiloxy group represented by -OSi(R')₃, wherein R' is a C₁-C₂₀ monovalent hydrocarbon group and each of the three R's may be the same as or different from one another; X is a hydroxy group or a hydrolyzable group, and in the case two or more Xs exist, the Xs may be same as or different from each other; and a is 1 or 2.

The hydrolyzable group represented by X in the formulas (1) and (2) is not particularly limited, and may be any conventionally known hydrolyzable group. Examples thereof include a hydrogen atom, a halogen atom, an alkoxy group, an acyloxy group, a ketoxymato group, an amino group, an amido group, an acid amido group, an aminooxy group, a mercapto group, and an alkenyloxy group. Desirable among these are a hydrogen atom, an alkoxy group, an acyloxy group, a ketoxymato group, an amino group, an amido group, an aminooxy group, a mercapto group, and an alkenyloxy group. Particularly desirable is an alkoxy group as it contributes to mild hydrolysis and is easy to handle.

Concrete examples of R² in the formula (2) include: alkyl groups such as a methyl group and an ethyl group; cycloalkyl groups such as a cyclohexyl group; aryl groups such as a phenyl group; aralkyl groups such as a benzyl group; and triorganosiloxy groups represented by (R')₃SiO- wherein R' is a group such as a methyl group or a phenyl group. Desirable among these is a methyl group.

Concrete examples of the reactive silyl group of the formula (1) include a trimethoxysilyl group, a triethoxysilyl group, and a triisopropoxysilyl group. Desirable among these are a trimethoxysilyl group and a triethoxysilyl group as they have high activity and contribute to good curability. Particularly desirable is a trimethoxysilyl group.

Concrete examples of the reactive silyl group of the formula (2), wherein a is 2, include a dimethoxymethylsilyl group, a diethoxymethylsilyl group, and a diisopropoxymethylsilyl group. In the case where a is 1, concrete examples thereof include a methoxydimethylsilyl group, an ethoxydimethylsilyl group, and an isopropoxydimethylsilyl group. Particularly desirable among these is a dimethoxymethylsilyl group as it has high activity and contributes to good curability. A dimethoxymethylsilyl group is also particularly desirable in terms of storage stability.

The reactive silyl group may be introduced by a conventionally known method. Examples thereof are listed below.

(i) An organic polymer having a functional group such as a hydroxy group in the molecule is allowed to react with an organic compound having an unsaturated group and an active group that is reactive with the functional group to provide an unsaturated group-containing organic polymer. Alternatively, the functional group-containing polymer is allowed to copolymerize with an unsaturated group-containing epoxy compound to provide an unsaturated group-containing organic polymer. Then, the reaction product is allowed to react with a reactive silyl group-containing hydrosilane for hydrosilylation.

(ii) The unsaturated group-containing organic polymer provided through the same manner as in the method (i) is allowed to react with a compound having a mercapto group and a reactive silyl group.

(iii) An organic polymer having a functional group such as a hydroxy group, an epoxy group or an isocyanato group in the molecule is allowed to react with a compound having a reactive silyl group and a functional group that is reactive with the above functional group.

The method (i) or the method (iii) in such a mode that a hydroxy group-terminated polymer is allowed to react with a compound having an isocyanato group and a reactive silyl group is desirable as a high conversion rate is achieved in a relatively short period of time. The method (i) is particularly desirable. This is because the reactive silyl group-containing organic polymer produced by the method (i) is likely to provide curable compositions having a lower viscosity and better workability than those of curable compositions provided from the organic polymer produced by the method (iii); and the organic polymer produced by the method (ii) has a strong odor due to mercaptosilane.

Concrete examples of the hydrosilane compound to be used upon introducing the reactive silyl group of the formula (1) by the method (i) include, but not limited to: halogenated silanes such as trichlorosilane; alkoxysilanes such as trimethoxysilane, triethoxysilane, and 1-[2-(trimethoxysilyl)ethyl]-1,1,3,3-tetramethyldisiloxane; acyloxysilanes such as triacetoxysilane; and ketoxymatesilanes such as tris(dimethylketoxymate)silane and tris(cyclohexylketoxymate)methylsilane. In particular, halogenated silanes and alkoxysilanes are desirable. Most desirable are alkoxysilanes as they contribute to mild hydrolysis and easy handleability of a curable composition to be provided. Of the alkoxysilanes, trimethoxysilane and triethoxysilane are desirable as they are easily available and contribute to good curability of a curable composition containing an organic polymer to be provided. Particularly desirable is trimethoxysilane.

An example of the synthesis method (ii) is, but not limited to, a method in which a mercapto group- and reactive silyl group-containing compound is introduced into an unsaturated-bond moiety in an organic polymer by a radical addition reaction in the presence of a radical initiator and/or a radical generation source.

In the case of introducing the reactive silyl group of the formula (1) by the method (ii), concrete examples of the mercapto group- and reactive silyl group-containing compound include, but not limited to, γ-mercaptopropyltrimethoxysilane, γ-mercaptopropyltriethoxysilane, mercaptomethyltrimethoxysilane, and mercaptomethyltriethoxysilane.

In the case of introducing the reactive silyl group of the formula (1) by the method (iii), concrete examples of the isocyanato group- and reactive silyl group-containing compound include, but not limited to, γ-isocyanatopropyltrimethoxysilane, γ-isocyanatopropyltriethoxysilane, isocyanatomethyltrimethoxysilane, and isocyanatomethyltriethoxysilane.

The trimethoxysilyl group-terminated organic polymer may be provided by the following methods:
(a) a trimethoxysilyl group is introduced into an end of the polymer by the method (i) with the use of trimethoxysilane;
(b) a trialkoxysilyl group is introduced into an end of the polymer by the method (i) with the use of a relatively safe trialkoxysilane, such as triethoxysilane, and then a trimethoxysilyl group is introduced into the end of the polymer by transesterification with a methoxy group-containing compound such as methanol;
(c) a trimethoxysilyl group is introduced into an end of the polymer by the method (ii) with the use of γ-mercaptopropyltrimethoxysilane; and
(d) a trimethoxysilyl group is introduced into an end of the polymer by the method (iii) with the use of γ-isocyanatopropyltrimethoxysilane.

An example of the method for reacting a hydroxy group-terminated polymer with an isocyanato group- and reactive silyl group-containing compound according to the method (iii) is, but not particularly limited to, a method disclosed in Japanese Kokai Publication H03-47825.

The reactive silyl group of the formula (2) is desirably introduced into the component (B) by the method (i). In particular, in the process where an organic polymer having a hydroxy group or a like functional group in the molecule is allowed to react with a compound having an unsaturated group which is reactive to the functional group, a compound having an unsaturated group represented by the following formula (6):

-O-R¹-C(CH₃)=CH₂ (6)

wherein R¹ is a C₁-C₂₀ bivalent organic group containing, as a constituent atom, at least one selected from the group consisting of hydrogen, carbon, and nitrogen, may be used. Thereafter, the provided reaction product is allowed to react with a reactive silyl group-containing hydrosilane for hydrosilylation. Concrete examples of the hydrosilane compound to be used include, but not limited to: halogenated silanes such as methyldichlorosilane, phenyldichlorosilane, dimethylchlorosilane, and diethylchlorosilane; alkoxysilanes such as methyldiethoxysilane, methyldimethoxysilane, phenyldimethoxysilane, dimethylmethoxysilane, dimethylethoxysilane, and diethylmethoxysilane; acyloxysilanes such as methyldiacetoxysilane, ethyldiacetoxysilane, phenyldiacetoxysilane, and dimethylacetoxysilane; and ketoxymatesilanes such as bis(dimethylketoxymate)methylsilane and bis(cyclohexylketoxymate)methylsilane. Desirable among these are halogenated silanes and alkoxysilanes. Most desirable are alkoxysilanes as they contribute to mild hydrolysis and easy handleability of curable compositions to be provided. In particular, a is desirably 2 as a cured product to be provided can have high strength and elongation. Of the alkoxysilanes, methyldimethoxysilane is particularly desirable as it is easily available, and a curable composition that contains an organic polymer to be provided can have high curability, storage stability, elongation properties, and tensile strength.

In the present invention, the silicon-containing group of the component (A) is desirably a group represented by the formula (3):

-C-R³-SiX₃ (3)

wherein R³ is a C₁-C₆ bivalent hydrocarbon group; and X is as defined above, and each of the three Xs may be the same as or different from one another. The organic polymer (A) having the silicon-containing group of the formula (3) is more desirable than other organic polymers (A) having an terminal moiety other than that of the formula (3) because the organic polymer (A) having the silicon-containing group of the formula (3) has a low viscosity, excellent rapid curability, and excellent storage stability together.

In accordance with the manner mentioned as the method (i), the organic polymer (A) having the silicon-containing group of the formula (3) may be provided, for example, by the addition reaction of an organic polymer having an unsaturated group represented by the formula (7):

-O-R⁵-CH=CH₂ (7)

wherein R⁵ is a linear or branched C₁-C₄ alkylene group, with a hydrosilane compound represented by the formula (8):

H-SiX₃ (8)

wherein X is as defined above, and the three Xs may be the same as or different from one another.

For providing the organic polymer (A) with a high content of silyl group, an organic polymer having an unsaturated group represented by the formula (6):

-O-R¹-C(CH₃)=CH₂ (6)

wherein R¹ is a C₁-C₂₀ bivalent organic group containing, as a constituent atom, at least one selected from the group consisting of hydrogen, carbon, and nitrogen, may be allowed to addition-react with a hydrosilane compound represented by the formula (8):

H-SiX₃ (8)

wherein X is as defined above, and the three Xs may be the same as or different from one another.

In the present invention, the silicon-containing group of the component (A) is desirably a group represented by the formula (4):

-C(=O)-NR⁴-R³-SiX₃ (4)

wherein R³ is as defined above; R⁴ is a C₁-C₂₀ hydrocarbon group; and X is as defined above, and the three Xs may be the same as or different from one another. The organic polymer (A) having the silicon-containing group of the formula (4) is more desirable than other organic polymers having an terminal moiety other than that of the formula (4) because the organic polymer (A) having the silicon-containing group of the formula (4) has particularly excellent rapid curability.

In accordance with the manner mentioned as the method (iii), the organic polymer (A) having the silicon-containing group of the formula (4) may be provided, for example, by reacting a hydroxy group-terminated organic polymer with an isocyanatosilane compound represented by the formula (9):

O=C=N-R³-SiX₃ (9)

wherein R³ and X are as defined above, or by reacting an isocyanato group-terminated organic polymer with a silicon compound represented by the formula (10):

W-R³-SiX₃ (10)

wherein R³ and X are as defined above; and W is an active hydrogen-containing group selected from a hydroxy group, a carboxyl group, a mercapto group, and a (primary or secondary) amino group.

The organic polymers (A) and (B) each may have a number average molecular weight (Mn) of about 500 to 100,000, more desirably 1,000 to 50,000, and particularly desirably 3,000 to 30,000 on a polystyrene equivalent basis in GPC. If the number average molecular weight (Mn) is lower than 500, the resulting cured product may be likely to be disadvantageous in elongation properties. If it is higher than 100,000, the resulting curable composition may have a high viscosity and may be likely to be disadvantageous in workability.

In particular, the organic polymer (B) has a great influence on the strength and elongation of a cured product; thus, it desirably has a number average molecular weight (Mn) as high as about 16,500 to 50,000.

The reactive silyl groups of the organic polymers (A) and (B) may be located at a main chain end or at a side chain end, or at both, of the polymer molecular chain. In particular, when the reactive silyl group is located at a main chain end of the molecular chain, the polymer component in a cured product to be finally provided has an increased effective network size. Thus, a rubber-like cured product having high strength, high elongation, and low elastic modulus is likely to be provided. As the organic polymer (A) has three reactive silyl groups, a cured product to be provided is likely to be fragile and have low elongation. For solving these problems, the reactive silyl group is desirably located at an end of the polymer.

The organic polymer (A) may be a linear polymer or may be a branched polymer. For achieving rapid surface curability, which is an object of the present invention, the polymer desirably has a branched chain structure. On the other hand, for providing a rubber-like cured product having high strength and elongation, the polymer desirably has a linear chain structure. The organic polymer (A) desirably contains, on average, 1.0 to 3.0, and more desirably 1.1 to 2.4, reactive silyl groups per one polymer molecule for providing a rubber-like cured product having high strength, high elongation, and low elastic modulus. If the polymer contains, on average, less than one reactive silyl group per one molecule, curability may be insufficient and favorable rubber elastic behavior is less likely to be exerted. If the polymer contains, on average, more than 3 reactive silyl groups per one molecule, the resulting cured product is likely to be disadvantageous in elongation properties.

The organic polymer (B) may be a linear polymer or may be a branched polymer. For providing a rubber-like cured product having high strength and elongation, the polymer desirably has a linear chain structure. In the organic polymer (B), desirably 85% or more, more desirably 90% or more, and most desirably 95% or more, of terminal moieties are the reactive silyl groups introduced.

The main chain skeletons of the organic polymers (A) and (B) each are desirably composed of at least one selected from a hydrogen atom, a carbon atom, a nitrogen atom, an oxygen atom, and a sulfur atom in terms of properties such as adhesiveness, workability, and depth curability.

The main chain skeletons of the organic polymers (A) and (B) each are not particularly limited, and examples thereof include organic polymers. Concrete examples thereof include: polyoxyalkylene polymers such as polyoxyethylene, polyoxypropylene, polyoxybutylene, polyoxytetramethylene, polyoxyethylene-polyoxypropylene copolymers, and polyoxypropylene-polyoxybutylene copolymers; hydrocarbon polymers such as ethylene-propylene copolymers, polyisobutylene, copolymers of isobutylene and isoprene or a like monomer, polychloroprene, polyisoprene, copolymers of isoprene or butadiene, and acrylonitrile and/or styrene or a like monomer, polybutadiene, and copolymers of isoprene or butadiene, and acrylonitrile and styrene or a like monomer, and hydrogenated polyolefin polymers derived from the hydrogenation of these polyolefin polymers; polyester polymers obtained by the condensation of a dibasic acid such as adipic acid and a glycol, or the ring-opening polymerization of a lactone(s); (meth)acrylate ester polymers obtained by the radical polymerization of compounds such as ethyl (meth)acrylate and butyl (meth)acrylate; vinyl polymers obtained by the radical polymerization of compounds such as (meth)acrylate ester compounds, vinyl acetate, acrylonitrile, and styrene; graft polymers obtained by polymerizing a vinyl compound in the polymers mentioned above; polysulfide polymers; polyamide polymers such as polyamide 6 produced by the ring-opening polymerization of ε-caprolactam, polyamide 6·6 produced by the polycondensation of hexamethylenediamine and adipic acid, polyamide 6·10 produced by the polycondensation of hexamethylenediamine and sebacic acid, polyamide 11 produced by the polycondensation of ε-aminoundecanoic acid, polyamide 12 produced by the ring-opening polymerization of ε-aminolaurolactam, and copolymer polyamides composed of a plurality of the aforementioned polyamides; polycarbonate polymers such as polycarbonates produced by the polycondensation of bisphenol A and carbonyl chloride; and diallyl phthalate polymers.
Further, polysiloxane polymers such as polydiorganosiloxane may be exemplified.

In particular, the organic polymers (A) and (B) each desirably contain, as the main chain skeleton, saturated hydrocarbon polymers such as polyisobutylene, hydrogenated polyisoprene, and hydrogenated polybutadiene, polyoxyalkylene polymers, (meth)acrylate ester polymers, or polysiloxane polymers. The organic polymers (A) and (B) having such a main chain skeleton each may have a relatively low glass transition temperature, and a cured product to be provided may be excellent in cold resistance.

The glass transition temperatures of the reactive silyl group-containing organic polymers (A) and (B) each are not particularly limited, and are desirably 20°C or lower, more desirably 0°C or lower, and particularly desirably -20°C or lower. If the glass transition temperature is higher than 20°C, the viscosity of the curable composition may increase in the winter season or in cold districts, which is likely to deteriorate workability. Further, a cured product to be provided is likely to have poor flexibility and poor elongation.

The aforementioned glass transition temperature can be determined by the DSC measurement in accordance with the method in JIS K7121.

The curable composition more desirably contains, as a main component, an organic polymer whose main chain skeleton is a saturated hydrocarbon polymer, a polyoxyalkylene polymer, or a (meth)acrylate ester polymer. When such a curable composition is used as an adhesive or a sealant, low-molecular-weight components are less likely to migrate (i.e. stain) to adherends.

Further, an organic polymer whose main chain skeleton is a polyoxyalkylene polymer or a (meth)acrylate ester polymer is particularly desirable. This is because such an organic polymer has high moisture permeability, and is excellent in depth curability when used as a main component of a one-pack type adhesive or sealant, and a cured product to be provided is excellent in adhesiveness. Most desirable is an organic polymer whose main chain skeleton is a polyoxyalkylene polymer.

The polyoxyalkylene polymer to be used as each main chain skeleton of the organic polymers (A) and (B) is a polymer having a repeating unit represented by the formula (11) :

-R⁶-O- (11)

wherein R⁶ is a linear or branched C₁-C₁₄ alkylene group.

R⁶ in the formula (11) is not particularly limited as long as it is a linear or branched C₁-C₁₄ alkylene group. In particular, a linear or branched C₂-C₄ alkylene group is desirable.

The repeating unit defined by the formula (11) is not particularly limited, and examples thereof include -CH₂O-, -CH₂CH₂O-, -CH₂CH(CH₃)O-, -CH₂CH(C₂H₅)O-, -CH₂C(CH₃)₂O-, and - CH₂CH₂CH₂CH₂O-.

The polyoxyalkylene polymer may have one repeating unit species or a plurality of repeating unit species. In the case of use in an application such as sealants, in particular, the organic polymers (A) and (B) each mainly containing a propylene oxide polymer as the main chain skeleton are desirable as they each are noncrystalline and have a relatively low viscosity.

Such a polyoxyalkylene polymer may be produced by any method such as a conventionally known method. Examples thereof include: a method with an alkali catalyst such as KOH; the method disclosed in Japanese Kokai Publication S61-215623 in which a transition metal compound-porphyrin complex, such as a complex obtained by reacting an organoaluminum compound with porphyrin, is used as a catalyst; the methods disclosed in Japanese Kokoku Publications S46-27250 and S59-15336 and US Patent Nos. 3,278,457, 3,278,458, 3,278,459, 3,427,256, 3,427,334 and 3,427,335, and the like in which a double metal cyanide complex is used as a catalyst; the method disclosed in Japanese Kokai Publication H10-273512 in which a polyphosphazene salt is used as a catalyst; and the method disclosed in Japanese Kokai Publication H11-060722 in which a phosphazene compound is used as a catalyst.

The polyoxyalkylene polymer containing a reactive silyl group may be produced by any method such as a conventionally known method. Examples thereof include: the methods disclosed in Japanese Kokoku Publications S45-36319 and S46-12154, Japanese Kokai Publications S50-156599, S54-6096, S55-13767, S55-13468 and S57-164123, Japanese Kokoku Publication H03-2450, and US Patent Nos. 3,632,557, 4,345,053, 4,366,307, and 4,960,844, and the like; and the methods disclosed in Japanese Kokai Publications S61-197631, S61-215622, S61-215623, S61-218632, H03-72527, H03-47825, and H08-231707, which can provide polymers with a high molecular weight (number average molecular weight of 6,000 or higher) and a narrow molecular weight distribution (Mw/Mn of 1.6 or below).

Each of the reactive silyl group-containing polyoxyalkylene polymers may be used alone, or a plurality thereof may be used in combination for formulating the curable composition.

The saturated hydrocarbon polymer to be used as each main chain skeleton of the organic polymers (A) and (B) is a polymer that is substantially free of any unsaturated carbon-carbon bond, except for an aromatic ring, in the molecule. Such a polymer is excellent in heat resistance, weather resistance, durability, and moisture barrier properties.

The saturated hydrocarbon polymer is not particularly limited. Examples thereof include: (i) polymers comprising a C₂-C₆ olefin compound, such as ethylene, propylene, 1-butene, or isobutylene, as a repeating unit; (ii) polymers comprising a diene compound, such as butadiene or isoprene, as a repeating unit; and (iii) polymers obtained, for example, by copolymerizing the aforementioned diene compound and the aforementioned olefin compound, followed by hydrogenation. In particular, isobutylene polymers and hydrogenated polybutadiene polymers are desirable as it is easy to introduce a functional group into an end of such polymers, and to control their molecular weight, and it is possible to adjust the number of terminal functional groups. Isobutylene polymers are more desirable.

The isobutylene polymer may be one in which all of the repeating units are derived from isobutylene or may be a copolymer of isobutylene with another compound. In the case where an isobutylene copolymer is used as the main chain skeleton, the polymer desirably has 50% by weight or more, more desirably 80% by weight or more, and particularly desirably 90 to 99% by weight, of an isobutylene-derived repeating unit in each molecule. Thereby, a cured product to be provided can have excellent rubber properties.

The saturated hydrocarbon polymer may be produced by any method such as a conventionally known polymerization method. In particular, the living polymerization method, which has been remarkably developed in recent years, is desirable. An example of the method of producing isobutylene polymers by the living polymerization method is the Inifer polymerization found by Kennedy et al. (J. P. Kennedy et al., J. Polymer Sci., Polymer Chem. Ed., 1997, 15, p. 2843). This polymerization method enables introduction of various functional groups into molecular ends and the isobutylene polymers to be provided are known to have a molecular weight of about 500 to 100,000 with a molecular weight distribution of not broader than 1.5.

The saturated hydrocarbon polymer containing a reactive silyl group may be produced by any method such as a conventionally known method. Examples thereof include the methods disclosed in Japanese Kokoku Publications H04-69659 and H07-108928, Japanese Kokai Publications S63-254149, S64-22904 and H01-197509, Japanese Patent Nos. 2539445 and 2873395, and Japanese Kokai Publication H07-53882.

Each of the reactive silyl group-containing saturated hydrocarbon polymers may be used alone, or a plurality of the polymers may be used in combination for formulating the curable composition.

The (meth)acrylate ester polymer to be used as each main chain skeleton of the organic polymers (A) and (B) is a polymer comprising a (meth)acrylate ester compound as a repeating unit. The expression "(meth)acrylate ester" refers to an acrylate ester and/or a methacrylate ester, and has the same meaning also in the following description.

The (meth)acrylate ester compound to be used as the repeating unit is not particularly limited. Examples thereof include (meth)acrylate compounds such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, γ-(methacryloyloxy)propyltrimethoxysilane, γ-(methacryloyloxy)propyldimethoxymethylsilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

The (meth)acrylate ester polymers include copolymers of a (meth)acrylate ester compound and a vinyl compound copolymerizable therewith. The vinyl compound is not particularly limited, and examples thereof include: styrene compounds such as styrene, vinyltoluene, α-methylstyrene, chlorostyrene, and styrenesulfonic acid and salts thereof; silyl group-containing vinyl compounds such as vinyltrimethoxysilane and vinyltriethoxysilane; maleic anhydride, maleic acid, and maleic acid monoalkyl esters and dialkyl esters; fumaric acid, and fumaric acid monoalkyl esters and dialkyl esters; maleimide compounds such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl compounds such as acrylonitrile and methacrylonitrile; amido group-containing vinyl compounds such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, allyl chloride, and allyl alcohol. A plurality of these may be used in combination as comonomers.

Of the (meth)acrylate ester polymers obtained from the aforementioned compounds, organic polymers comprising, as the main chain skeleton, a copolymer of a styrene compound and a (meth)acrylate compound are desirable as they provide a cured product having excellent physical properties; organic polymers comprising, as the main chain skeleton, a copolymer of an acrylate ester compound and a methacrylate ester compound are more desirable; and organic polymers comprising, as the main chain skeleton, a polymer of an acrylate ester compound are particularly desirable.

The curable composition is required to have a low viscosity, and a cured product to be provided therefrom is required to have high elongation, weather resistance, and heat resistance. Thus, the main chain skeletons of the organic polymers (A) and (B) each more desirably comprise a butyl acrylate compound.

For use in fields such as automobiles, cured products to be provided are required to have excellent oil resistance.

The organic polymers (A) and (B) each more desirably contain, as the main chain skeleton, a copolymer mainly derived from ethyl acrylate for providing a cured product having excellent oil resistance.

The curable composition which comprises the organic polymers (A) and (B) each containing an ethyl acrylate copolymer as the main chain skeleton is likely to provide a cured product having slightly poor low-temperature properties (cold resistance) while having excellent oil resistance. For improving the low-temperature properties, a part of ethyl acrylate comonomers is replaced with butyl acrylate. Here, as the proportion of butyl acrylate increases, the good oil resistance is likely to be impaired. Thus, the proportion thereof is desirably 40% or lower, and more desirably 30% or lower, in the case where good oil resistance is required for use.

For improving the low-temperature properties without impairing the oil resistance, it is also desirable to use, as a comonomer, 2-methoxyethyl acrylate or 2-ethoxyethyl acrylate in which an oxygen atom is introduced into the side chain alkyl group.

Here, the introduction of an alkoxy group having an ether bond in the side chain is likely to cause poor thermal stability of a cured product to be provided. Thus, the proportion thereof is desirably 40% or lower in the case where good thermal stability is required for use.

As mentioned above, appropriate selection of comonomers and adjustment of the proportion thereof enable the production of the suitable organic polymers (A) and (B) each containing an ethyl acrylate copolymer as the main chain skeleton, based on various uses and requirements. Such selection and adjustment are performed by taking into consideration physical properties such as oil resistance, heat resistance, and low-temperature properties which a cured product to be provided is required to have. For example, without any limitative meaning, copolymers of ethyl acrylate, butyl acrylate, and 2-methoxyethyl acrylate (weight ratio: 40-50/20-30/30-20) have an excellent balance between physical properties including oil resistance, heat resistance, and low-temperature properties.

In the present invention, these desirable compounds may be copolymerized and, further, block-copolymerized with another compound. In such a case, these desirable compounds are desirably contained in an amount of 40% by weight or more.

The (meth)acrylate ester polymer may be produced by any method such as a conventionally known method. In particular, the living radical polymerization method is desirable as this method enables easy introduction of a cross-linkable functional group into a molecular chain end at a high introduction rate and production of polymers having a narrow molecular weight distribution and a low viscosity.

The polymers provided by ordinary free radical polymerization with, for example, an azo compound or a peroxide as a polymerization initiator are likely to have a greater molecular weight distribution value generally not lower than 2 and a higher viscosity.

Of the methods of producing (meth)acrylate ester polymers by the aforementioned "living radical polymerization method", the "atom transfer radical polymerization method" in which an organic halide or sulfonyl halide compound is used as an initiator and a transition metal complex is used as a catalyst is more desirable for producing (meth)acrylate ester polymers containing a specific functional group. This is because, for example, the atom transfer radical polymerization method has the characteristics of "living radical polymerization", that is, the capability to provide polymers with a narrow molecular weight distribution and a low viscosity, and, in addition, the method has a high degree of freedom upon selecting an initiator and a catalyst, and can provide polymers having, at the end thereof, a halogen or the like which is relatively advantageous to functional-group exchange reactions. An example of the atom transfer radical polymerization method is the method described in Matyjaszewski et al., Journal of the American Chemical Society (J. Am. Chem. Soc.), 1995, 117, p. 5614.

The (meth)acrylate ester polymer containing a reactive silyl group may be produced by any method. Examples thereof include the free radical polymerization method with a chain transfer agent, as disclosed in Japanese Kokoku Publications H03-14068 and H04-55444 and Japanese Kokai Publication H06-211922, and the atom transfer radical polymerization method as disclosed in Japanese Kokai Publication H09-272714.

A (meth)acrylate ester copolymer derived from a plurality of the aforementioned (meth)acrylate ester compounds can be used as each main chain skeleton of the organic polymers (A) and (B).

Concrete examples of the (meth)acrylate ester copolymer comprising a plurality of the (meth)acrylate ester compounds include copolymers whose main chain skeleton substantially comprises: a repeating unit having a C₁-C₈ alkyl group represented by the formula (12):

-CH₂-C(R⁷)(COOR⁸)- (12)

wherein R⁷ is a hydrogen atom or a methyl group, and R⁸ is a C₁-C₈ alkyl group; and a repeating unit having an alkyl group containing 9 or more carbon atoms represented by the formula (13):

-CH₂-C(R⁷)(COOR⁹)- (13)

wherein R⁷ is as defined above, and R⁹ is an alkyl group containing 9 or more carbon atoms.

R⁸ in the formula (12) is not particularly limited as long as it is a C₁-C₈ alkyl group. Examples thereof include a methyl group, an ethyl group, a propyl group, an n-butyl group, a t-butyl group, and a 2-ethylhexyl group. In particular, C₁-C₄ alkyl groups are desirable. R⁸ contained in the copolymer is not necessarily limited to one alkyl group species.

R⁹ in the formula (13) is not particularly limited as long as it is an alkyl group containing 9 or more carbon atoms. Examples thereof include a lauryl group, a tridecyl group, a cetyl group, a stearyl group, and a behenyl group. In particular, C₁₀-C₃₀ alkyl groups are desirable and C₁₀-C₂₀ long-chain alkyl groups are more desirable. R⁹ contained in the copolymer is not necessarily limited to one alkyl group species.

The (meth)acrylate ester copolymer substantially comprises the repeating units defined by the formulas (12) and (13). The term "substantially" as used herein means that the total amount of the repeating units defined by the formulas (12) and (13) in the copolymer is higher than 50% by weight. The total amount of the repeating units defined by the formulas (12) and (13) in the copolymer is desirably 70% by weight or higher.

The content ratio between the repeating units of the formulas (12) and (13) in the copolymer in terms of the weight ratio (formula (12): formula (13)) is desirably 95:5 to 40:60, and more desirably 90:10 to 60:40. The (meth)acrylate ester copolymer comprises a copolymer of (meth)acrylate ester compounds used as the repeating units defined by the formulas (12) and (13) and a vinyl compound copolymerizable therewith.

Examples of the vinyl compound include: acrylic acids such as acrylic acid and methacrylic acid; amido group-containing compounds such as acrylamide, methacrylamide, N-methylolacrylamide, and N-methylolmethacrylamide; epoxy group-containing compounds such as glycidyl acrylate and glycidyl methacrylate; amino group-containing compounds such as diethylaminoethyl acrylate, diethylaminoethyl methacrylate, and aminoethyl vinyl ether; and other compounds such as acrylonitrile, styrene, α-methylstyrene, alkyl vinyl ethers, vinyl chloride, vinyl acetate, vinyl propionate, and ethylene.

The main chain skeleton of the organic polymers (A) and (B) may contain, if necessary, another repeating unit having, for example, a urethane bond so long as the effects of the present invention are not significantly lessened thereby.

The urethane bond-containing repeating unit is not particularly limited, and an example thereof is a repeating unit containing a group formed by the reaction between an isocyanato group and an active hydrogen group (hereinafter, the group thus formed is also referred to as an "amide segment").

The amide segment is an organic group represented by the formula (14):

-NR¹⁰-C(=O)- (14)

wherein R¹⁰ is a hydrogen atom or an organic group.

The amide segment is not particularly limited, and examples thereof include: a urethane group formed by the reaction between an isocyanato group and a hydroxy group; a urea group formed by the reaction between an isocyanato group and an amino group; and a thiourethane group formed by the reaction between an isocyanato group and a mercapto group.

The definition of the "amide segment" as used herein also includes therein organic groups formed by the reactions of an active hydrogen in a urethane group, a urea group, and a thiourethane group with an isocyanato group.

The reactive silyl group-containing organic polymer containing an amide segment in the main chain skeleton may be produced by any method. An example thereof is a method comprising the steps of: reacting an organic polymer having an active hydrogen-containing organic group at the end thereof with an excessive amount of a polyisocyanate compound to provide a polymer having an isocyanato group at a polyurethane main chain end; and, thereafter or simultaneously therewith, reacting all or part of the isocyanato groups in the polymer with a group W in a silicon compound represented by the formula (15):

W-R¹¹-SiR¹²₃₋ₐXₐ (15)

wherein R¹¹ is a divalent organic group, and more desirably a divalent C₁-C₂₀ hydrocarbon group; the (3-a) R¹²s each are a hydrogen atom or an organic group; the a Xs each are a hydroxy group or a hydrolyzable group; a is 1, 2, or 3; and W is a group containing at least one active hydrogen selected from the group consisting of a hydroxy group, a carboxyl group, a mercapto group, and a (primary or secondary) amino group. Such a method is disclosed in, for example, Japanese Kokoku Publication S46-12154 (US Patent No. 3,632,557); Japanese Kokai Publications S58-109529 (US Patent No. 4,374,237), S62-13430 (US Patent No. 4,645,816), H08-53528 (EP 0676403), and H10-204144 (EP 0831108); Japanese Kohyo Publication 2003-508561 (US Patent No. 6,197,912); Japanese Kokai Publications H06-211879 (US Patent No. 5,364,955), H10-53637 (US Patent No. 5,756,751), H11-100427, 2000-169544, 2000-169545, and 2002-212415; Japanese Patent No. 3,313,360; US Patent Nos. 4,067,844 and 3,711,445; and Japanese Kokai Publication 2001-323040.

In addition, another example thereof is a method comprising the step of reacting an active hydrogen-containing group at an end of an organic polymer with an isocyanato group of a reactive silyl group-containing isocyanate compound represented by the formula (16):

O=C=N-R¹¹-SiR¹²₃₋ₐXₐ (16)

wherein R¹¹, R¹², X, and a are as defined in the formula (15). Such a method is disclosed in, for example, Japanese Kokai Publications H11-279249 (US Patent No. 5,990,257), 2000-119365 (US Patent No. 6,046,270), S58-29818 (US Patent No. 4,345,053), H03-47825 (US Patent No. 5,068,304), H11-60724, 2002-155145, and 2002-249538; WO03/018658, and WO03/059981.

The organic polymer having an active hydrogen-containing group at the end thereof is not particularly limited, and examples thereof include hydroxy group-terminated oxyalkylene polymers (polyether polyols), polyacrylic polyols, polyester polyols, hydroxy group-terminated saturated hydrocarbon polymers (polyolefin polyols), polythiol compounds, and polyamine compounds.

In particular, organic polymers comprising a polyether polyol, a polyacrylic polyol, and a polyolefin polyol in the main chain skeleton are desirable as they have a relatively low glass transition temperature and provide a cured product having excellent cold resistance.

Organic polymers comprising a polyether polyol are particularly desirable as they have a low viscosity and good workability, and provide a cured product having good depth curability and adhesiveness. Curable compositions comprising an organic polymer containing a polyacrylic polyol and a saturated hydrocarbon polymer are more desirable as they provide a cured product having good weather resistance and heat resistance.

The polyether polyol desirably has, on average, at least 0.7 terminal hydroxy groups per molecule.

The production method thereof is not particularly limited, and may be any conventionally known method. Examples thereof include: a polymerization method in which an alkali metal catalyst is used; and a polymerization method of an alkylene oxide in which a polyhydroxy compound containing at least two hydroxy groups per molecule is used as an initiator in the presence of a double metal cyanide complex or cesium.

Of the aforementioned polymerization methods, the polymerization method with a double metal cyanide complex is desirable as it provides polymers having a low degree of unsaturation, a narrow molecular weight distribution (Mw/Mn), and a low viscosity, and a cured product to be provided has excellent acid resistance and weather resistance.

The term "polyacrylic polyol" refers to a polyol whose skeleton is a (meth)acrylic acid alkyl ester (co)polymer and whose molecule contains a hydroxy group.

The production method thereof is desirably the living radical polymerization method, and more desirably the atom transfer radical polymerization method as they provide polymers having a narrow molecular weight distribution and a low viscosity. Also desirable is the polymerization method involving the so-called SGO process in which an acrylic acid alkyl ester compound is continuously bulk-polymerized under high-temperature and high-pressure conditions, as disclosed in Japanese Kokai Publication 2001-207157. An example of the polyacrylic polyol is ARUFON UH-2000 produced by Toagosei Co., Ltd.

The polyisocyanate compound is not particularly limited, and examples thereof include: aromatic polyisocyanates such as toluene(tolylene)diisocyanate, diphenylmethane diisocyanate, and xylylene diisocyanate; and aliphatic polyisocyanates such as isophorone diisocyanate and hexamethylene diisocyanate.

The silicon compound of the formula (15) is not particularly limited, and examples thereof include: amino group-containing silane compounds such as γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silane compounds such as γ-hydroxypropyltrimethoxysilane; and mercapto group-containing silane compounds such as γ-mercaptopropyltrimethoxysilane.

Further examples of the silicon compound of the formula (15) include Michael addition products derived from various α,β-unsaturated carbonyl compounds and primary amino group-containing silane compounds or Michael addition products derived from various (meth)acryloyl group-containing silane compounds and primary amino group-containing compounds. Such products are disclosed in Japanese Kokai Publications H06-211879 (US Patent No. 5,364,955), H10-53637 (US Patent No. 5,756,751), H10-204144 (EP 0831108), 2000-169544, and 2000-169545.

The reactive silyl group-containing isocyanate compound of the formula (16) is not particularly limited, and examples thereof include γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, and diethoxymethylsilylmethyl isocyanate.

Further examples of the reactive silyl group-containing isocyanate compound of the formula (16) are reaction products derived from a silicon compound of the formula (8) and an excessive amount of a polyisocyanate compound, as disclosed in Japanese Kokai Publication 2000-119365 (US Patent No. 6,046,270).

The main chain skeleton of each of the organic polymers (A) and (B) is desirably either a polyoxyalkylene polymer or a (meth)acrylate ester polymer. This is because the organic polymers having such a main chain skeleton can provide a curable composition having good workability and rapid surface curability and depth curability suitable for practical use, and a cured product to be provided has excellent mechanical properties (such as high strength and high elongation), and, additionally, such a polymer has good compatibility.

The polyoxyalkylene polymer is desirable in that it provides a curable composition having excellent workability and depth curability, and a cured product to be provided has excellent mechanical properties. The (meth)acrylic ester polymer is desirable in that a cured product to be provided can have excellent weather resistance at the surface. It is most desirable that both of the organic polymers (A) and (B) are polyoxyalkylene polymers in terms of good balance on the whole.

With respect to the blending amount of the components (A) and (B), the weight ratio of the components (A) and (B) is important for the balance between the surface curing rate of a curable composition and the tensile properties of its cured product. The weight ratio (component (A)/component (B)) is required to be 25/75 to 75/25, and is desirably 30/70 to 70/30. A weight ratio (component (A)/component (B)) of less than 25/75 is likely to cause a decrease in surface curing rate. A weight ratio of more than 75/25 is likely to cause a decrease in tensile properties (in particular, elongation at break and strength at break) of a cured product. Thus, the weight ratio (component (A)/component (B)) is required to be 25/75 to 75/25 in terms of practicality. One species of the organic polymer (A) or (B) may be used, or a plurality of species thereof may be used in combination.

In the present invention, a silanol condensation catalyst is desirably used for promoting the reaction of the aforementioned reactive silyl group. The silanol condensation catalyst is not particularly limited, and generally used condensation catalysts may be used. It is desirably (C) a dialkyltin compound having a C₁-C₈ alkyl group, and/or a dialkyltin compound having a C₉-C₁₂ alkyl group as they achieve excellent adhesiveness.

Concrete examples of the dialkyltin compound having a C₁-C₈ alkyl group (ingredient (C)) include: dimethyltin dilaurate, dimethyltin dioctanoate, dimethyltin diacetate, dimethyltin dimethoxide, dimethyltin bis(acetylacetonate), diethyltin dilaurate, diethyltin dioctanoate, diethyltin diacetate, diethyltin dimethoxide, diethyltin bis(acetylacetonate), dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dibutyltin dimethoxide, dibutyltin bis(nonylphenoxide), dibutenyltin oxide, dibutyltin oxide, dibutyltin bis(acetylacetonate), dibutyltin bis(ethylacetoacetate), products of the reaction between dibutyltin oxide and a silicate compound, products of the reaction between dibutyltin oxide and a phthalate ester, dioctyltin dilaurate, dioctyltin maleate, dioctyltin phthalate, dioctyltin dioctanoate, dioctyltin bis(2-ethylhexanoate), dioctyltin bis(methylmaleate), dioctyltin bis(ethylmaleate), dioctyltin bis(butylmaleate), dioctyltin bis(octylmaleate); dioctyltin bis(tridecylmaleate), dioctyltin bis(benzylmaleate), dioctyltin diacetate, dioctyltin dimethoxide, dioctyltin bis(nonylphenoxide), dioctyltin oxide, dioctyltin bis(acetylacetonate), dioctyltin bis(ethylacetoacetate), products of the reaction between dioctyltin oxide and a silicate compound, and products of the reaction between dioctyltin oxide and a phthalate ester.

Of the dialkyltin compounds having a C₁-C₈ alkyl group (ingredient (C)), dibutyltin compounds are desirable owing to their high activity and easy availability. Dioctyltin compounds are also desirable owing to their practical activity, although slightly inferior to that of dibutyltin compounds, and their good safety.

In view of better curability, storage stability, and availability, dibutyltin dilaurate, dibutyltin bis(acetylacetonate), products of the reaction between dibutyltin oxide and a silicate compound, dioctyltin bis(acetylacetonate), and products of the reaction between dioctyltin oxide and a silicate compound are particularly desirable among the dibutyltin compounds and the dioctyltin compounds.

In the case of using the dialkyltin compound having a C₁-C₈ alkyl group (ingredient (C)) in the present invention, the amount of the ingredient (C) is required to be less than 0.5% by weight to the total amount of the curable composition. This is because the larger amount of the ingredient (C) may exhibit more toxicity or may have more influence on the environment.

Concrete examples of the dialkyltin compound having a C₉-C₁₂ alkyl group include dinonyltin dilaurate, dinonyltin diacetate, dinonyltin bis(acetonate), didecyltin dilaurate, didecyltin diacetate, didecyltin bis(acetonate), dilauryltin dilaurate, dlauryltin diacetate, and dilauryltin bis(acetonate).

In the case of using the dialkyltin compound having a C₉-C₁₂ alkyl group, the amount of this ingredient is desirably as small as possible, although this ingredient exhibits less toxicity or has less influence on the environment than the ingredient (C). The amount thereof is desirably less than 2% by weight, more desirably less than 1% by weight, and particularly desirably less than 0.5% by weight, to the total amount of the curable composition.

The curable composition of the present invention desirably contains an amidine compound (D) as a silanol curing catalyst. The amidine compound is represented by the formula (17):

R¹³N=CR¹⁴-NR¹⁵₂ (17)

wherein R¹³, R¹⁴, and the two R¹⁵S each are independently a hydrogen atom or an organic group.

The curable composition of the present invention containing the amidine compound (D) as a curing catalyst can have practical curability, and a cured product to be provided can have good adhesiveness to various adherends, even in the case of containing no dialkyltin ingredient (C).

The molecular weight of the amidine compound (D) is desirably 60 or higher, more desirably 120 or higher, and particularly desirably 130 or higher. The upper limit of the molecular weight is not particularly limited; in general, it is desirably 1,000 or lower.

The amidine compound is not particularly limited, and examples thereof include: pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine; imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one; amidine compounds such as 1,8-diazabicyclo[5.4.0]undec-7-ene (hereinafter referred to as DBU), 1,5-diazabicyclo[4.3.0]non-5-ene, 2,9-diazabicyclo[4.3.0]nona-1,3,5,7-tetraene, 6-(dibutylamino)-1,8-diazabicyclo[5.4.0]undec-7-ene, and 3-(1,8-diazabicyclo[5.4.0]undec-7-en-6-yl)propan-2-ol; guanidine compounds such as guanidine, dicyandiamide, 1-methylguanidine, 1-ethylguanidine, 1-cyclohexylguanidine, 1-phenylguanidine, 1,1-dimethylguanidine, 1,3-dimethylguanidine, 1,2-diphenylguanidine, 1,1,3-trimethylguanidine, 1,2,3-trimethylguanidine, 1,1,3,3-tetramethylguanidine, 1,1,2,3,3-pentamethylguanidine, 3-ethyl-1,1,2,2-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-n-octyl-1,5,7-triazabicyclo[4.4.0]dec-5-ene; and biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-ethylbiguanide, 1,1'-ethylenebisbiguanide, 1,5-ethylenebiguanide, 1-[3-(diethylamino)propyl]biguanide, 1-[3-(dibutylamino)propyl]biguanide, and N',N"-dihexyl-3,12-diimino-2,4,11,13-tetraazatetradecanediamidine.

Desirable among these amidine compounds are 1,1,2,3,3-pentamethylguanidine, 1-phenylguanidine, 1,5,7-triazabicyclo[4.4.0]dec-5-ene, 7-methyl-1,5,7-triazabicyclo[4.4.0]dec-5-ene, 1,8-diazabicyclo[5.4.0]undec-7-ene, and like guanidine compounds as they have high activity and can impart good curability to the components (A) and (B). More desirable are 1-(o-tolyl)biguanide, and cyclic guanidine compounds such as 7-methyl-1,5,7-triazabicyclo[4.4.0]dec-5-ene.

Further, 1,2-dimethyl-1,4,5,6-tetrahydropyrimidine, 1-phenylguanidine, 1-(o-tolyl)biguanide; 7-methyl-1,5,7-triazabicyclo[4.4.0]dec-5-ene, 1,8-diazabicyclo[5.4.0]undec-7-ene, and 1-(o-tolyl)biguanide are desirable as they are easily available and can impart good curability to the components (A) and (B), and a cured product to be provided can have excellent adhesiveness. More desirable are 1-phenylguanidine and 1-(o-tolyl)biguanide.

One of the amidine compounds may be blended in the curable composition, or a plurality of the amidine compounds may be blended therein. The amidine compound (D) may be used with the dialkyltin compound (C), or may be used without the ingredient (C). The amount of the amidine compound (D) is desirably 10% by weight or less, and particularly desirably in the range of 0.1 to 0.5% by weight, to the total amount of the curable composition. If the ingredient (D) is used in an amount of less than 0.1% by weight, a curable composition provided may not have a practical curing rate, and its curing reaction may insufficiently proceed. If the amidine compound (D) is used in an amount of more than 10% by weight, the usable time of a curable composition may be too short and, thus, workability is likely to be poor.

The curable composition of the present invention may contain the dialkyltin compound (C) and/or the amidine compound (D) as a curing catalyst. The curable composition may further contain another curing catalyst so long as the effects of the invention are not lessened thereby. Concrete examples thereof include: carboxylic acid metal salts such as tin carboxylates, lead carboxylates, bismuth carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylates, and cerium carboxylates; titanium compounds such as tetrabutyl titanate, tetrapropyl titanate, titanium tetrakis(acetylacetonate), bis(acetylacetonato)diisopropoxytitanium, and diisopropoxytitanium bis(ethylacetoacetate); aluminum compounds such as aluminum tris(acetylacetonate), aluminum tris(ethylacetoacetate), and diisopropoxyaluminum ethylacetoacetate; zirconium compounds such as zirconium tetrakis(acetylacetonate); various metal alkoxides such as tetrabutoxyhafnium; organic acidic phosphate esters; organosulfonic acids such as trifluoromethanesulfonic acid; and inorganic acids such as hydrochloric acid, phosphoric acid, and boronic acid.

The combination use of these curing catalysts may cause higher catalytic activity and better properties such as depth curability, thin layer curability, and adhesiveness. The total amount of these curing catalysts is desirably 0.01 to 20 parts by weight, and more desirably 0.1 to 10 parts by weight, per 100 parts by weight in total of the components (A) and (B).

The curable composition may further contain a carboxylic acid as a promoter so long as the effects of the present invention are not lessened thereby. Concrete examples thereof include: straight-chain saturated fatty acids such as acetic acid, propionic acid, butyric acid, valeric acid, caproic acid, enanthic acid, caprylic acid, 2-ethylhexanoic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monoenoic unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid, and 10-undecenoic acid; polyenoic unsaturated fatty acids such as linoelaidic acid, linolic acid, 10,12-octadecadienoic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 1-methylbutyric acid, isobutyric acid, 2-ethylbutyric acid, isovaleric acid, tuberculostearic acid, pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyloctanoic acid, 2-ethyl-2,5-dimethylhexanoic acid, neodecanoic acid, and versatic acid; triple bond-containing fatty acids such as propiolic acid, tariric acid, stearolic acid, crepenynic acid, xymenynic acid, and 7-hexadecynoic acid; alicyclic carboxylic acids such as naphthenic acid, malvalic acid, sterculic acid, hydnocarpic acid, chaulmoogric acid, gorlic acid, 1-methylcyclopentanecarboxylic acid, 1-methylcyclohexanecarboxylic acid, 2-methylbicyclo[2.2.1]-5-heptene-2-carboxylic acid, 1-adamantanecarboxylic acid, bicyclo[2.2.1]heptane-1-carboxylic acid, and bicyclo[2.2.2]octane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2,2-dimethyl-3-hydroxypropionic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, ricinolic acid, camlolenic acid, licanic acid, pheronic acid, cerebronic acid, and 2-methyl-7-oxabicyclo[2.2.1]-5-heptene-2-carboxylic acid; and halogen-substituted monocarboxylic acids such as chloroacetic acid, 2-chloroacrylic acid, and chlorobenzoic acid. Examples of an aliphatic dicarboxylic acid include: saturated dicarboxylic acids such as adipic acid, azelaic acid, pimelic acid, suberic acid, sebacic acid, ethylmalonic acid, glutaric acid, oxalic acid, malonic acid, succinic acid, oxydiacetic acid, dimethylmalonic acid, ethylmethylmalonic acid, diethylmalonic acid, 2,2-dimethylsuccinic acid, 2,2-diethylsuccinic acid, 2,2-dimethylglutaric acid, and 1,2,2-trimethyl-1,3-cyclopentanedicarboxylic acid; and unsaturated dicarboxylic acids such as maleic acid, fumaric acid, acetylenedicarboxylic acid, and itaconic acid. Examples of an aliphatic polycarboxylic acid include tricarboxylic acids such as aconitic acid, 4,4-dimethylaconitic acid, citric acid, isocitric acid, and 3-methylisocitric acid. Examples of an aromatic carboxylic acid include: aromatic monocarboxylic acids such as benzoic acid, 9-anthracenecarboxylic acid, atrolactic acid, anisic acid, isopropylbenzoic acid, salicylic acid, and toluic acid; and aromatic polycarboxylic acids such as phthalic acid, isophthalic acid, terephthalic acid, carboxyphenylacetic acid, and pyromellitic acid. The combination use of these curing catalysts may cause higher catalytic activity and better properties such as curability and depth curability. The amount of the carboxylic acid is desirably 0.01 to 20 parts by weight, and more desirably 0.1 to 10 parts by weight, per 100 parts by weight in total of the components (A) and (B).

The curable composition of the present invention desirably contains an amino group-containing silane coupling agent as an ingredient (E). The amino group-containing silane coupling agent is a compound having a reactive silyl group and an amino group. The combination use of the components (A) and (B), and the ingredient (E) in the present invention causes better adhesiveness and curability of the curable composition of the present invention, and causes higher strength and hardness of a cured product to be provided.

The amino group-containing silane coupling agent to be blended in the curable composition of the present invention greatly improves the adhesiveness to various adherends including inorganic substrates such as glass, aluminum, stainless steel, zinc, copper, and mortar, and organic substrates such as vinyl chloride, acrylic, polyester, polyethylene, polypropylene, and polycarbonate, under non-primer conditions or primer-treatment conditions. In the case of non-primer conditions, the adhesiveness to adherends is particularly greatly improved.

Examples of the reactive silyl group of the amino group-containing silane coupling agent (E) include groups represented by the formula (1) or (2) in which X is a hydrolyzable group. Concrete examples of the hydrolyzable group include the above-exemplified groups. Groups such as a methoxy group and an ethoxy group are desirable owing to their good hydrolysis rate. The number of hydrolyzable groups per molecule is desirably 2 or more, and particularly desirably 3 or more. A primary amino group is more desirable as it greatly improves adhesiveness, and the strength and hardness of a cured product to be provided.

Concrete examples of the amino group-containing silane coupling agent include γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(2-aminoethyl)-γ-aminopropyltrimethoxysilane, N-(2-aminoethyl)-γ-aminopropylmethyldimethoxysilane, N-(2-aminoethyl)-γ-aminopropyltriethoxysilane, N-(2-aminoethyl)-γ-aminopropylmethyldiethoxysilane, N-(2-aminoethyl)-γ-aminopropyltriisopropoxysilane, N-(6-aminohexyl)-γ-aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ-ureidopropyltrimethoxysilane, γ-ureidopropyltriethoxysilane, N-phenyl-γ-aminopropyltrimethoxysilane, N-phenylaminomethyltrimethoxysilane, N-benzyl-γ-aminopropyltrimethoxysilane, N-vinylbenzyl-γ-aminopropyltriethoxysilane, N,N'-bis[3-(trimethoxysilyl)propyl]ethylenediamine, N-cyclohexylaminomethyltriethoxysilane, N-cyclohexylaminomethyldiethoxymethylsilane, and N-phenylaminomethyltrimethoxysilane.

The ingredient (E) is used in an amount of 0.1 to 20 parts by weight, and desirably 0.5 to 10 parts by weight, per 100 parts by weight in total of the components (A) and (B). If the amount of the ingredient (E) is less than the range, adhesiveness and physical properties may be insufficiently improved. If the amount of the ingredient (E) is more than the range, the resulting cured product may have poor elongation, and depth curability is likely to be poor.

The curable composition of the present invention desirably contains colloidal calcium carbonate as an ingredient (F). The combination use of the colloidal calcium carbonate with the components (A) and (B) of the present invention is particularly desirable as it can reduce costs to produce the curable composition of the present invention, and can improve the strength and hardness of a cured product to be provided. Desirably, the colloidal calcium carbonate has an average particle size of 0.5 µm or smaller, and the surface of each particle thereof is treated with a fatty acid or a fatty acid salt.

The colloidal calcium carbonate (F) is used in an amount of 1 to 250 parts by weight, and desirably 10 to 200 parts by weight, per 100 parts by weight in total of the components (A) and (B). If the amount of the ingredient (F) is less than the range, physical properties may be insufficiently improved. If the amount of the ingredient (F) is more than the range, the resulting cured product is likely to have poor elongation and the curable composition may have too high viscosity; thus, workability is likely to be poor.

The composition of the present invention may contain a filler other than the colloidal calcium carbonate (F). Examples of the filler include: reinforcing fillers such as fumed silica, precipitated silica, crystalline silica, fused silica, dolomite, silicic anhydride, hydrous silicic acid, and carbon black; heavy calcium carbonate, magnesium carbonate, diatomaceous earth, calcined clay, clay, talc, titanium oxide, bentonite, organic bentonite, ferric oxide, fine aluminum powder, flint powder, zinc oxide, activated zinc white, shirasu balloons, glass microballoons, organic microballoons based on a phenol resin or a vinylidene chloride resin, resin powders such as PVC powder and PMMA powder; and fibrous fillers such as asbestos, glass fibers, and filaments. In particular, heavy calcium carbonate is desirable owing to its lower cost and its excellent balance of physical properties of a cured product.

The composition of the present invention may contain a silane coupling agent other than the amino group-containing silane coupling agent. Concrete examples of the silane coupling agent other than the amino group-containing silane coupling agent include: isocyanato group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, trimethoxysilylmethylisocyanate, and dimethoxymethylsilylmethylisocyanate; ketimine type silanes such as N-(1,3-dimethylbutylidene)-3-(triethoxysilyl)-1-propanamine; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane; vinyl-type unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; and isocyanuratosilanes such as tris(3-trimethoxysilylpropyl)isocyanurate. Derivatives formed by modifying these silanes each can be also used as the silane coupling agent.

Concrete examples of an adhesiveness-imparting agent other than the silane coupling agent include epoxy resins, phenol resins, sulfur, alkyl titanates, and aromatic polyisocyanates. Each of the adhesiveness-imparting agents may be used alone, or two or more of these may be used in admixture.

The curable composition of the present invention may contain a plasticizer. The plasticizer adjusts the viscosity and slump properties of the curable composition and adjusts the mechanical properties of a cured product to be provided such as tensile strength and elongation properties.

Examples of the plasticizer include: phthalate esters such as dibutyl phthalate, diheptyl phthalate, di(2-ethylhexyl) phthalate, diisodecyl phthalate, and butyl benzyl phthalate; non-aromatic dibasic acid esters such as dioctyl adipate, dioctyl sebacate, dibutyl sebacate, and diisodecyl succinate; aliphatic esters such as butyl oleate and methyl acetylricinoleate; phosphate esters such as tricresyl phosphate and tributyl phosphate; trimellitate esters; chlorinated paraffins; hydrocarbon oils such as alkyldiphenyls and partially hydrogenated terphenyls; process oils; epoxy plasticizers such as epoxidized soybean oil and benzyl epoxystearate; and polyethers, including polyether polyols such as polyethylene glycol, polypropylene glycol, and polytetramethylene glycol, or derivatives of the polyether polyols in each of which a hydroxy group is substituted with an ester group, an ether group or the like.

In particular, polypropylene glycol is desirable in view of better compatibility with the component (A) or (B), better mechanical properties, and lower costs, and di(2-ethylhexyl)phthalate and diisodecyl phthalate are desirable in view of better compatibility.

Each of these plasticizers may be used alone, or a plurality of these may be used in combination. A low-molecular-weight plasticizer and a polymeric plasticizer may be used in combination. These plasticizers may be blended upon the polymer production.

The plasticizer is used in an amount of desirably 1 to 150 parts by weight, more desirably 10 to 120 parts by weight, and particularly desirably 20 to 100 parts by weight, per 100 parts by weight in total of the components (A) and (B). If the amount of the plasticizer is less than 1 part by weight, the plasticizer is likely to exert no effect. If the amount of the plasticizer is more than 150 parts by weight, the resulting cured product is likely to have insufficient mechanical strength.

The composition of the present invention may contain a polymeric plasticizer other than the aforementioned plasticizers. The addition of the polymeric plasticizer allows the curable composition to maintain its initial properties for a long time period, and achieves better drying properties (also referred to as coatability) when applying an alkyd coating to the resulting cured product, compared to the addition of a low-molecular-weight plasticizer which contains no polymer component in the molecule.

The polymeric plasticizer is not particularly limited, and examples thereof include: vinyl polymers provided by polymerizing vinyl monomers by various methods; polyalkylene glycol esters such as diethylene glycol dibenzoate, triethylene glycol dibenzoate, and pentaerythritol esters; polyester-type plasticizers derived from a dibasic acid, such as sebacic acid, adipic acid, azelaic acid, and phthalic acid, and a dihydric alcohol, such as ethylene glycol, diethylene glycol, triethylene glycol, propylene glycol, and dipropylene glycol; polystyrenes such as polystyrene and poly-α-methylstyrene; polybutadiene, polybutene, polyisobutylene, butadiene-acrylonitrile copolymers, and polychloroprene.

Of these polymeric plasticizers, vinyl polymers are desirable as they are highly compatible with the components (A) and (B), and a cured product to be provided can have good weather resistance and heat resistance. In particular, acrylic polymers and/or methacrylic polymers are more desirable; polyacrylic acid alkyl ester and like acrylic polymers are particularly desirable.

Polyacrylic acid alkyl esters may be produced by any method. The living radical polymerization method is desirable, and the atom transfer radical polymerization method is more desirable as the methods can provide a polymer having a narrow molecular weight distribution and a low viscosity. Particularly desirable is the polymerization method involving the so-called SGO process in which an acrylic acid alkyl ester compound is continuously bulk-polymerized under high-temperature and high-pressure conditions, as disclosed in Japanese Kokai Publication 2001-207157.

The polymeric plasticizer has a number average molecular weight of 500 to 15,000, desirably 800 to 10,000, more desirably 1,000 to 8,000, particularly desirably 1,000 to 5,000, and most desirably 1,000 to 3,000. If the molecular weight of the polymeric plasticizer is too low, the plasticizer may flow out with time from a cured product to be provided, due to heat or rain. Thus, the cured product may fail to maintain the initial physical properties for a long time period, may be contaminated, for example, by dust adhesion, and may have poor alkyd coatability. If the molecular weight is too high, the curable composition may have a high viscosity and, thus, workability is likely to be poor.

The molecular weight distribution of the polymeric plasticizer is not particularly limited. The molecular weight distribution is desirably narrow, and is narrower than 1.80, desirably 1.70 or narrower, more desirably 1.60 or narrower, further desirably 1.50 or narrower, particularly desirably 1.40 or narrower, and most desirably 1.30 or narrower.

In the case of polyether polymers, the number average molecular weight is determined by the end-group analysis. In the case of other polymers, it is determined by the GPC method. The molecular weight distribution (Mw/Mn) is measured by the GPC method (on the polystyrene equivalent basis).

The polymeric plasticizer may be a reactive silyl group-containing one or a reactive silyl group-free one. The polymeric plasticizer desirably contains a reactive silyl group. In such a case, the polymeric plasticizer is involved in the curing reaction and, thus, migration of the plasticizer from the provided cured product can be prevented.

The reactive silyl group-containing polymeric plasticizer is a compound that contains, desirably 1 or less, and more desirably 0.8 or less, reactive silyl groups per molecule on average. In the case of adding the reactive silyl group-containing plasticizer, in particular a reactive silyl group-containing oxyalkylene polymer, the number average molecular weight thereof is desirably lower than that of each of the organic polymers (A) and (B) for sufficient plasticizing effects.

Each of the polymeric plasticizers may be used alone, or a plurality thereof may be used in combination. A low-molecular-weight plasticizer and the polymeric plasticizer may be used in combination. These plasticizers may be added upon the production of the organic polymers (A) and (B).

The polymeric plasticizer is desirably added in an amount of 5 to 150 parts by weight, more desirably 10 to 120 parts by weight, and particularly desirably 20 to 100 parts by weight, per 100 parts by weight in total of the components (A) and (B). If the amount thereof is less than 5 parts by weight, the plasticizer is less likely to exert its effects. If the amount thereof is more than 150 parts by weight, the resulting cured product is likely to have insufficient mechanical strength.

The curable composition of the present invention may contain a silicate, if necessary. The silicate acts as a cross-linking agent on the components (A) and (B), and improves the restorability, durability, and creep resistance of a cured product to be provided.

Addition of the silicate allows the resulting cured product to have better adhesiveness, water-resistant adhesiveness, and bond durability under high-temperature and high-moisture conditions. The silicate is not particularly limited, and examples thereof include tetraalkoxysilanes or partial hydrolysis condensation products derived therefrom. Concrete examples thereof include tetraalkoxysilanes (tetraalkyl silicates) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane, and tetra-t-butoxysilane as well as partial hydrolysis condensation products derived therefrom.

In the case of adding the silicate, the amount thereof is desirably 0.1 to 20 parts by weight, and more desirably 0.5 to 10 parts by weight, per 100 parts by weight in total of the components (A) and (B).

The tetraalkoxysilane-derived partial hydrolysis condensation product is not particularly limited, and examples thereof include products derived from tetraalkoxysilanes by adding water thereto to cause partial hydrolysis and condensation.

The addition of a tetraalkoxysilane-derived partial hydrolysis condensation product is desirable as the curable composition containing such a condensation product can provide a cured product having better restorability, durability, and creep resistance, as compared with the curable composition containing a tetraalkoxysilane.

Commercially available tetraalkoxysilane-derived partial hydrolysis condensation products are, for example, Methyl Silicate 51 and Ethyl Silicate 40 (each produced by Colcoat Co., Ltd.); these can be used as additives.

For inhibiting change of surface curability of the curable composition during storage, the silicate desirably contains a silicon atom-bound hydrolyzable group that is the same as the hydrolyzable group in the reactive silyl group of each of the components (A) and (B). Thus, in the case where the components (A) and (B) each contain a methoxysilyl group, a methoxysilyl group-containing silicate is desirably selected; in the case where the components (A) and (B) each contain an ethoxysilyl group, an ethoxysilyl group-containing silicate is desirably selected.

The curable composition of the present invention may contain a tackifier, if necessary.

The tackifier resin is not particularly limited as long as it is commonly used at normal temperature, irrespective of whether it is in a solid state or a liquid state. Examples thereof include styrene block copolymers, and hydrogenation products thereof, phenol resins, modified phenol resins (such as cashew oil-modified phenol resins and tall oil-modified phenol resins), terpene phenol resins, xylene-phenol resins, cyclopentadiene-phenol resins, coumarone indene resins, rosin resins, rosin ester resins, hydrogenated rosin ester resins, xylene resins, low-molecular-weight polystyrene resins, styrene copolymer resins, petroleum resins (such as C5 hydrocarbon resins, C9 hydrocarbon resins, and C5C9 hydrocarbon copolymer resins), hydrogenated petroleum resins, terpene resins, DCPD resins, and petroleum resins. Each of these may be used alone, or a plurality thereof may be used in combination.

The styrene block copolymers and hydrogenation products derived therefrom are not particularly limited, and examples thereof include styrene-butadiene-styrene block copolymers (SBS), styrene-isoprene-styrene block copolymers (SIS), styrene-ethylenebutylene-styrene block copolymers (SEBS), styrene-ethylenepropylene-styrene block copolymers (SEPS), and styrene-isobutylene-styrene block copolymers (SIBS).

In the case of adding the tackifier, the amount thereof is desirably 5 to 1,000 parts by weight, and more desirably 10 to 100 parts by weight, per 100 parts by weight in total of the components (A) and (B).

The curable composition of the present invention may contain a solvent or a diluent, if necessary. The solvent and the diluent are not particularly limited, and examples thereof include aliphatic hydrocarbons, aromatic hydrocarbons, alicyclic hydrocarbons, halogenated hydrocarbons, alcohols, esters, ketones, and ethers. Each of these may be used alone, or a plurality thereof may be used in combination.

In the case of adding the solvent or the diluent, the solvent or the diluent desirably has a boiling point of 150°C or higher, and more desirably 200°C or higher, for preventing emission of volatile components into the air on the occasion of indoor use of the curable composition.

The curable composition of the present invention may contain a physical property modifier, if necessary. The physical property modifier adjusts the tensile properties and hardness of a cured product to be provided.

The physical property modifier is not particularly limited, and examples thereof include: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes. Each of these may be used alone, or a plurality thereof may be used in admixture.

Among such physical property modifiers, those which form, upon hydrolysis, a compound containing a monovalent silanol group in the molecule are desirable. Such modifiers can reduce the modulus of a cured product to be provided without worsening the surface stickiness thereof. In particular, a physical property modifier that forms trimethylsilanol upon hydrolysis is more desirable.

The compound that forms, upon hydrolysis, a compound containing a monovalent silanol group in the molecule is not particularly limited, and examples thereof include: the compounds disclosed in Japanese Kokai Publication H05-117521; compounds that are derived from alkyl alcohols, such as hexanol, octanol, and decanol, and capable of forming, upon hydrolysis, an organosilicon compound represented by R₃SiOH such as trimethylsilanol; and the compounds disclosed in Japanese Kokai Publication H11-241029 which are derived from polyhydric alcohols containing 3 or more hydroxy groups in each molecule, such as trimethylolpropane, glycerol, pentaerythritol, or sorbitol, and capable of forming, upon hydrolysis, an organosilicon compound represented by R₃SiOH such as trimethylsilanol.

Examples thereof further include: the compounds disclosed in Japanese Kokai Publication H07-258534 which are derived from an oxypropylene polymer and capable of forming, upon hydrolysis, an organosilicon compound represented by R₃SiOH such as trimethylsilanol; and the compounds disclosed in Japanese Kokai Publication H06-279693 which contain a cross-linkable hydrolyzable silyl group and a silyl group that is capable of forming, upon hydrolysis, a monovalent silanol group-containing compound.

In the case of adding the physical property modifier, the amount thereof is desirably 0.1 to 20 parts by weight, and more desirably 0.5 to 10 parts by weight, per 100 parts by weight in total of the components (A) and (B).

The curable composition of the present invention may contain a thixotropic agent (anti-sagging agent), if necessary. The thixotropic agent prevents the curable composition from sagging and improves workability of the curable composition.

The thixotropic agent is not particularly limited, and examples thereof include: polyamide waxes; hydrogenated castor oil derivatives; and metal soaps such as calcium stearate, aluminum stearate, and barium stearate. Examples thereof further include: rubber powder having a particle size of 10 to 500 µm, as disclosed in Japanese Kokai Publication H11-349916; and organic fibers as disclosed in Japanese Kokai Publication 2003-155389. Each of these thixotropic agents (anti-sagging agents) may be used alone, or a plurality thereof may be used in combination.

In the case of adding the thixotropic agent, the amount thereof is desirably 0.1 to 20 parts by weight per 100 parts by weight in total of the components (A) and (B).

The curable composition of the present invention may contain a compound containing an epoxy group in the molecule, if necessary. The addition of an epoxy group-containing compound enhances restorability of a cured product to be provided.

The epoxy group-containing compound is not particularly limited, and examples thereof include: epoxidized unsaturated fats and oils; epoxidized unsaturated fatty acid esters; alicyclic epoxy compounds; epichlorohydrin derivatives and like compounds; and mixtures thereof. Concrete examples thereof include epoxidized soybean oil, epoxidized linseed oil, bis(2-ethylhexyl)-4,5-epoxycyclohexane-1,2-dicarboxylate (E-PS), epoxyoctyl stearate, and epoxybutyl stearate. Desirable among these is E-PS.

In the case of adding the epoxy compound, the amount thereof is desirably 0.5 to 50 parts by weight per 100 parts by weight in total of the components (A) and (B).

The curable composition of the present invention may contain a photocurable substance, if necessary. The photocurable substance can be chemically changed in molecular structure by light in a short period of time, and thereby subjected to physical changes such as curing. The addition of the photocurable substance to the curable composition results in the formation of a photocurable substance-based layer on the surface of a cured product to be provided; this causes less stickiness and better weather resistance of the cured product.

The photocurable substance is not particularly limited, and examples thereof include conventionally known ones, such as organic monomers, oligomers, resins, and compositions containing these; concrete examples thereof include unsaturated acrylic compounds, polyvinyl cinnamates, and azidized resins.

Examples of the unsaturated acrylic compounds include monomers, oligomers, or mixtures thereof, containing one or more acrylic or methacrylic unsaturated groups in each molecule. Concrete examples thereof include monomers such as propylene (or butylene or ethylene) glycol di(meth)acrylate and neopentyl glycol di(meth)acrylate, or oligoesters each having a molecular weight of 10,000 or lower. More concrete examples thereof include special acrylates such as (bifunctional) ARONIX M-210, ARONIX M-215, ARONIX M-220, ARONIX M-233, ARONIX M-240, and ARONIX M-245; (trifunctional) ARONIX M-305, ARONIX M-309, ARONIX M-310, ARONIX M-315, ARONIX M-320, and ARONIX M-325; and (polyfunctional) ARONIX M-400 (all produced by Toagosei Co., Ltd.). In particular, acrylic functional group-containing compounds are desirable, and compounds containing, on average, 3 or more acrylic functional groups in each molecule are more desirable.

Examples of the polyvinyl cinnamates include photosensitive resins having a cinnamoyl group as a photosensitive group, which are compounds resulting from esterification of polyvinyl alcohol with cinnamic acid, and many other derivatives of polyvinyl cinnamates.

The azidized resins are known as photosensitive resins in each of which an azido group serves as a photosensitive group. General examples thereof include photosensitive rubber solutions each containing a diazide compound added as a photosensitizer. Further, "Kankosei Jushi (Photosensitive Resins)" (published on March 17, 1972 by Insatsu Gakkai Shuppanbu Ltd., p. 93 ff., p. 106 ff., and p. 117 ff.) discloses detailed examples. These may be used either singly or in admixture, if necessary together with a sensitizer.

In some cases, the addition of a sensitizer, such as a ketone or a nitro compound, or an accelerator, such as an amine, may enhance the effects.

In the case of adding the photocurable substance, the amount thereof is desirably 0.1 to 20 parts by weight, and more desirably 0.5 to 10 parts by weight, per 100 parts by weight in total of the components (A) and (B). If the amount is 0.1 parts by weight or less, the weather resistance of a cured product to be provided may be hardly enhanced. If the amount is 20 parts by weight or more, the resulting cured product may be too hard; this is likely to cause problems such as cracking.

The curable composition of the present invention may contain an oxygen-curable substance, if necessary. The oxygen-curable substance is capable of reacting with oxygen in the air to cure. The addition of the oxygen-curable substance results in the formation of a cured layer in the vicinity of the surface of a cured product to be provided; this causes prevention of stickiness on the surface of the cured product and prevention of dirt and dust adhesion to the surface of the cured product.

The oxygen-curable substance is not particularly limited as long as it is a compound containing an unsaturated compound capable of reacting with oxygen in the air. Examples thereof include: drying oils such as tung oil and linseed oil, and various alkyd resins obtained by modifying the compounds; acrylic polymers modified by a drying oil, epoxy resins, and silicone resins; liquid polymers such as 1,2-polybutadiene, 1,4-polybutadiene, and C5-C8 diene polymers, which are obtained by polymerizing or copolymerizing diene compounds such as butadiene, chloroprene, isoprene, and 1,3-pentadiene; liquid copolymers such as NBR and SBR, which are obtained by copolymerizing a diene compound with a vinyl compound (e.g. acrylonitrile or styrene) that is copolymerizable with the diene compound, such that the diene compound serves as the main component; and various modifications thereof (maleinated modifications, boiled oil modifications, etc.). In particular, tung oil and liquid diene polymers are desirable. Each of these oxygen-curable substances may be added alone, or a plurality thereof may be added in combination.

The addition of a catalyst or metal dryer that promotes the curing reaction may enhance the effects of the oxygen-curable substance. The catalyst or metal dryer for promoting the curing reaction are not particularly limited, and examples thereof include metal salts such as cobalt naphthenate, lead naphthenate, zirconium naphthenate, cobalt octylate, and zirconium octylate, and amine compounds.

In the case of adding the oxygen-curable substance, the amount thereof is desirably 0.1 to 20 parts by weight, and more desirably 0.5 to 10 parts by weight, per 100 parts by weight in total of the components (A) and (B). If the amount thereof is less than 0.1 parts by weight, the stain resistance of a cured product to be provided is likely to be insufficient. If the amount thereof is more than 20 parts by weight, the properties such as tensile properties of the resulting cured product is likely to be impaired.

The oxygen-curable substance is desirably added in admixture with a photocurable substance, as disclosed in Japanese Kokai Publication H03-160053.

The curable composition of the present invention may contain an antioxidant, if necessary. The addition of an antioxidant enhances the heat resistance of a cured product to be provided.

The antioxidant is not particularly limited, and examples thereof include hindered phenol-type antioxidants, monophenol-type antioxidants, bisphenol-type antioxidants, and polyphenol-type antioxidants. In particular, hindered phenol-type antioxidants are desirable. Also desirable are hindered amine-type light stabilizers such as TINUVIN 622LD and TINUVIN 144; CHIMASSORB 944LD and CHIMASSORB 119FL (each produced by Ciba Japan K.K.); ADK STAB LA-57, ADK STAB LA-62, ADK STAB LA-67, ADK STAB LA-63, and ADK STAB LA-68 (each produced by ADEKA CORPORATION); and SANOL LS-770, SANOL LS-765, SANOL LS-292, SANOL LS-2626, SANOL LS-1114, and SANOL LS-744 (each produced by Sankyo Lifetech Co., Ltd.). Japanese Kokai Publications H04-283259 and H09-194731 also disclose concrete examples of the antioxidant.

In the case of adding the antioxidant, the amount thereof is desirably 0.1 to 10 parts by weight, and more desirably 0.2 to 5 parts by weight, per 100 parts by weight in total of the components (A) and (B).

The curable composition of the present invention may contain a light stabilizer, if necessary. The addition of a light stabilizer prevents photooxidative degradation of a cured product to be provided.

The light stabilizer is not particularly limited, and examples thereof include benzotriazole compounds, hindered amine compounds, and benzoate compounds. In particular, hindered amine-type light stabilizers are desirable.

In the case of adding the light stabilizer, the amount thereof is desirably 0.1 to 10 parts by weight, and more desirably 0.2 to 5 parts by weight, per 100 parts by weight in total of the components (A) and (B). Japanese Kokai Publication H09-194731 also discloses concrete examples of the light stabilizer.

In the case of adding a photocurable substance such as an unsaturated acrylic compound to the curable composition of the present invention, a hindered amine-type light stabilizer containing a tertiary amine group is desirably added as disclosed in Japanese Kokai Publication H05-70531. Such addition allows the curable composition to have better storage stability.

The tertiary amine group-containing hindered amine-type light stabilizer is not particularly limited, and examples thereof include: TINUVIN 622LD, TINUVIN 144, and CHIMASSORB 119FL (each produced by Ciba Japan K.K.); ADK STAB LA-57, LA-62, LA-67, and LA-63 (each produced by ADEKA CORPORATION); and SANOL LS-765, LS-292, LS-2626, LS-1114, and LS-744 (each produced by Sankyo Lifetech Co., Ltd.).

The curable composition of the present invention may contain an ultraviolet absorber, if necessary. The addition of an ultraviolet absorber improves the surface weather resistance of a cured product to be provided.

The ultraviolet absorber is not particularly limited, and examples thereof include benzophenone compounds, benzotriazole compounds, salicylate compounds, substituted tolyl compounds, and metal chelate compounds. In particular, benzotriazole-type ultraviolet absorbers are desirable.

In the case of adding the ultraviolet absorber, the amount thereof is desirably 0.1 to 10 parts by weight, and more desirably 0.2 to 5 parts by weight, per 100 parts by weight in total of the components (A) and (B).

The antioxidant, the light stabilizer, and the ultraviolet absorber are desirably added together to the curable composition. For example, a phenol-type or hindered phenol-type antioxidant, a hindered amine-type light stabilizer, and a benzotriazole-type ultraviolet absorber are desirably added in admixture.

The curable composition of the present invention may contain a flame retardant, if necessary. The flame retardant is not particularly limited, and examples thereof include: phosphorus-containing flame retardants such as ammonium polyphosphate and tricresyl phosphate; and such flame retardants as aluminum hydroxide, magnesium hydroxide, and thermally expandable graphite. Each of the flame retardants may be added alone, or a plurality thereof may be added in combination.

In the case of adding the flame retardant, the amount thereof is desirably 5 to 200 parts by weight, and more desirably 10 to 100 parts by weight, per 100 parts by weight of the organic polymers.

The curable composition of the present invention may contain, if necessary, various additives other than those mentioned above for adjusting various physical properties of the curable composition or of a cured product to be provided. Examples of such additives include curability modifiers, radical inhibitors, metal deactivators, antiozonants, phosphorus-containing peroxide decomposers, lubricants, pigments, blowing agents, anti-termites, and antifungal agents. Japanese Kokoku Publications H04-69659 and H07-108928, and Japanese Kokai Publications S63-254149, S64-22904, and 2001-72854 disclose concrete examples thereof. Each of these additives may be added alone, or a plurality thereof may be added in combination.

In the case where the curable composition is of the one-pack type, the composition contains all formulation ingredients as mixed up in advance. This may cause the composition to cure during storage if moisture is present in the formulation ingredients. Thus, the formulation ingredients that contain moisture are desirably dehydrated and dried prior to the addition, or are desirably dehydrated by reducing the pressure upon compounding and kneading.

In the case where the curable composition is of the two-pack type, the curing catalyst is not required to be blended in the base mixture including the reactive silyl group-containing organic polymer. Thus, the composition is less likely to cure (gelatinize) even though some moisture is contained in the formulation ingredients. When storage stability is required for a long time period, the formulation ingredients are desirably dehydrated and dried.

Desirable examples of the dehydrating or drying method include: heat drying or vacuum dehydration in cases where the formulation ingredients are solids such as powder; and vacuum dehydration, or dehydration with substances such as a synthetic zeolite, activated alumina, silica gel, quick lime, and magnesium oxide in cases where they are liquids. Desirable examples thereof further include a dehydration method comprising the steps of adding an alkoxysilane compound, an oxazolidine compound, or an isocyanate compound to the curable composition and reacting the compound with water contained in the formulation ingredients. Here, examples of the alkoxysilane compound include n-propyltrimethoxysilane, vinyltrimethoxysilane, vinylmethyldimethoxysilane, methyl silicate, ethyl silicate, γ-mercpatopropylmethyldimethoxysilane, γ-mercaptopropylmethyldiethoxysilane, and γ-glycidoxypropyltrimethoxysilane, and examples of the oxazolidine compound include 3-ethyl-2-methyl-2-(3-methylbutyl)-1,3-oxazolidine. As mentioned above, the additions of such an alkoxysilane compound, oxazolidine compound, and isocyanate compound improve storage stability of the curable composition.

For the purpose of drying, the alkoxysilane compound, such as vinyltrimethoxysilane, capable of reacting with water is used in an amount of desirably 0.1 to 20 parts by weight, and more desirably 0.5 to 10 parts by weight, per 100 parts by weight in total of the components (A) and (B).

The curable composition of the present invention may be produced by any method. Examples thereof include conventionally known methods such as a method in which the aforementioned formulation ingredients are blended and kneaded at normal temperature or under heating with a mixer, roller, kneader, or the like, and a method in which the formulation ingredients are dissolved with a small amount of an appropriate solvent, and then mixed with one another.

When exposed to the air, the curable composition of the present invention three-dimensionally forms a network structure under the action of atmospheric moisture and, thus, the composition is cured to be a solid having rubber elasticity.

### EXAMPLES

The following will more concretely describe the present invention, referring to examples and comparative examples. Here, the present invention is not limited to these examples.

### (Preparation 1)

Propylene oxide was polymerized in the presence of polyoxypropylene triol having a molecular weight of about 3,000 as an initiator and a zinc hexacyanocobaltate glyme complex catalyst to provide a polypropylene oxide (P-1) having a number average molecular weight of about 26,000 (polystyrene-equivalent value determined with a TOSOH model HLC-8120 GPC solvent delivery system, a TOSOH model TSK-GEL H type column, and THF as a solvent). Thereto was added a methanol solution of NaOMe in an amount of 1.2 equivalents relative to the hydroxy groups of that hydroxy group-terminated polypropylene oxide (P-1), and then the methanol was distilled off. To the residue was added allyl chloride, and thereby each terminal hydroxy group was converted to an allyl group. The unreacted allyl chloride was removed by volatilization under reduced pressure.

The provided crude allyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, an allyl group-terminated trifunctional polypropylene oxide having a number average molecular weight of about 26,000 was provided.

Using an isopropanol solution of a platinum-vinylsiloxane complex (150 ppm, platinum content: 3% by weight) as a catalyst, the provided allyl group-terminated trifunctional polypropylene oxide (100 parts by weight) was reacted with trimethoxysilane (2.0 parts by weight) at 90°C for 2 hours to provide a trimethoxysilyl group-terminated polypropylene oxide (A-1). Here, ¹H-NMR measurement (performed in a CDCl₃ solvent with a JEOL model JNM-LA400) provided the following values:
the relative value (S) of a peak integral value of the terminal allyl group (-CH₂-CH=CH₂ (around 5.1 ppm)) in the allyl group-terminated polypropylene oxide to a peak integral value of the methyl group (around 1.2 ppm) of the polypropylene oxide main chain; and
the relative value (S') of a peak integral value of the methylene group bound to the silicon atom of the terminal silyl group (-CH₂-CH₂-CH₂-Si(OCH₃)₃ (around 0.6 ppm)) in the trimethoxysilyl group-terminated polypropylene oxide (A-1) after the hydrosilylation to a peak integral value of the methyl group (around 1.2 ppm) of the polypropylene oxide main chain. Based on the values, the silyl group introduction rate (S'/S) was determined, and the trimethoxysilyl group introduction rate into the ends was found to be 78%.

### (Preparation 2)

Using bismuth(III) 2-ethylhexanoate (30 ppm) as a catalyst, the hydroxy group-terminated polypropylene oxide (P-1) (100 parts by weight) provided in Preparation 1 was reacted with γ-isocyanatopropyltrimethoxysilane (1.8 parts by weight) at 90°C for 1 hour to provide a trimethoxysilyl-terminated polyoxypropylene polymer (A-2). As a result of ¹H-NMR measurement performed in the same manner as mentioned above, the trimethoxysilyl group introduction rate into the ends was found to be 70%.

### (Preparation 3)

Propylene oxide was polymerized in the presence of polypropylene glycol as an initiator and a zinc hexacyanocobaltate glyme complex catalyst to provide a hydroxy group-terminated polyether oligomer having a number average molecular weight of about 28,500 (polystyrene-equivalent value determined in the same manner as in Preparation 1). Thereto was added a methanol solution of NaOMe in an amount of 1.2 equivalents relative to the hydroxy groups of the hydroxy group-terminated polyether oligomer, and then the methanol was distilled off. To the residue was added 3-chloro-2-methyl-1-propene, and thereby each terminal hydroxy group was converted to a metallyl group. The provided crude metallyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, a metallyl group-terminated bifunctional polypropylene oxide having a number average molecular weight of about 28,500 was provided.

Using sulfur (70 ppm, a 1-wt.% solution in toluene) and an isopropanol solution of a platinum-divinyldisiloxane complex (150 ppm, platinum content: 3% by weight) as catalysts, the provided metallyl group-terminated polypropylene oxide (100 parts by weight) was reacted with dimethoxymethylsilane (2.75 parts by weight) at 90°C for 5 hours to provide a methyldimethoxysilyl-terminated polyoxypropylene polymer (B-1). As a result of ¹H-NMR measurement performed in the same manner as mentioned above, the methyldimethoxysilyl group introduction rate into the ends was found to be 98%.

### (Preparation 4)

Propylene oxide was polymerized in the presence of a mixture of polyoxypropylenediol (molecular weight: about 2,000) and polyoxypropylenetriol (molecular weight: about 3,000) (weight ratio: 1/1) as an initiator and a zinc hexacyanocobaltate glyme complex catalyst to provide a polypropylene oxide having a number average molecular weight of about 19,000 (polystyrene-equivalent value determined in the same manner as in Preparation 1). Thereto was added a methanol solution of NaOMe in an amount of 1.2 equivalents relative to the hydroxy groups of that hydroxy group-terminated polypropylene oxide, and then the methanol was distilled off. To the residue was added allyl chloride, and thereby each terminal hydroxy group was converted to an allyl group.

The provided crude allyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, an allyl group-terminated trifunctional polypropylene oxide having a number average molecular weight of about 19,000 was provided.

Using an isopropanol solution of a platinum-vinylsiloxane complex (150 ppm, platinum content: 3% by weight) as a catalyst, the provided allyl group-terminated polypropylene oxide (100 parts by weight) was reacted with methyldimethoxysilane (1.35 parts by weight) at 90°C for 2 hours to provide a methyldimethoxysilyl group-terminated polypropylene oxide (C-1). As a result of ¹H-NMR measurement performed in the same manner as mentioned above, the methyldimethoxysilyl group introduction rate into the ends was found to be about 70%.

### (Preparation 5)

Propylene oxide was polymerized in the presence of polypropylene glycol as an initiator and a zinc hexacyanocobaltate glyme complex catalyst to provide a polypropylene oxide having a number average molecular weight of about 28,500 (polystyrene-equivalent value determined in the same manner as in Preparation 1). Thereto was added a methanol solution of NaOMe in an amount of 1.2 equivalents relative to the hydroxy groups of that hydroxy group-terminated polypropylene oxide, and then the methanol was distilled off. To the residue was added allyl chloride, and thereby each terminal hydroxy group was converted to an allyl group.

The provided crude allyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, an allyl group-terminated bifunctional polypropylene oxide having a number average molecular weight of about 28,500 was provided.

Using an isopropanol solution of a platinum-vinylsiloxane complex (150 ppm, platinum content: 3% by weight) as a catalyst, the provided allyl group-terminated polypropylene oxide (100 parts by weight) was reacted with methyldimethoxysilane (0.94 parts by weight) at 90°C for 2 hours to provide a methyldimethoxysilyl group-terminated polypropylene oxide (C-2). As a result of ¹H-NMR measurement, the methyldimethoxysilyl group introduction rate into the ends was found to be about 78%.

### (Preparation 6)

A 250-L reactor was charged with CuBr (1.09 kg), acetonitrile (11.4 kg), n-butyl acrylate (26.0 kg), and diethyl 2,5-dibromoadipate (2.28 kg) under nitrogen atmosphere, and the mixture was stirred at 70°C to 80°C for about 30 minutes. To the resulting mixture was added pentamethyldiethylenetriamine, and the reaction was allowed to start. After 30 minutes of the reaction, n-butyl acrylate (104 kg) was continuously added over 2 hours. Pentamethyldiethylenetriamine was appropriately added in the course of the reaction so that the internal temperature was maintained at 70°C to 90°C. The total amount of pentamethyldiethylenetriamine used so far was 220 g. After 4 hours of the reaction from the start, the mixture was heated with stirring at 80°C under reduced pressure to remove volatile components. To the resulting product were added acetonitrile (45.7 kg), 1,7-octadiene (14.0 kg), and pentamethyldiethylenetriamine (439 g), and the mixture was stirred for 8 hours. The mixture was heated with stirring at 80°C under reduced pressure to remove volatile components.

Toluene was added to this concentrated product and the polymer was dissolved therein. To the solution was added diatomaceous earth as a filter aid, aluminum silicate and hydrotalcite as adsorbents, and then the mixture was heated with stirring at an internal temperature of 100°C under an oxygen/nitrogen mixed gas atmosphere (oxygen concentration: 6%). The mixture was filtrated so that the solids therein was removed. Then, the filtrate was heated with stirring at an internal temperature of 100°C under reduced pressure to remove volatile components. To this concentrated product were further added aluminum silicate and hydrotalcite as adsorbents, and a heat deterioration inhibitor, and the mixture was heated with stirring under reduced pressure (average temperature: about 175°C, degree of pressure reduction: 10 Torr or lower). To the resultant mixture were further added aluminum silicate and hydrotalcite as adsorbents, and an antioxidant, and the mixture was heated with stirring at an internal temperature of 150°C under an oxygen/nitrogen mixed gas atmosphere (oxygen concentration: 6%). Toluene was added to the concentrated product and the polymer was dissolved therein. The mixture was filtrated so that the solids therein was removed, and the filtrate was heated with stirring under reduced pressure to remove volatile components. Thereby, an alkenyl group-containing polymer was provided.

The alkenyl group-containing polymer, triethoxysilane (3.0 molar equivalents relative to the alkenyl groups), methyl orthoformate (1.0 molar equivalent relative to the alkenyl groups), and an isopropanol solution of a platinum-vinylsiloxane complex (330 ppm, platinum content: 3% by weight) were mixed with one another. The mixture was heated with stirring at 115°C for 2 hours under nitrogen atmosphere. ¹H-NMR measurement was performed to confirm that the alkenyl groups were not present. The reaction mixture was concentrated to provide a triethoxysilyl group-terminated poly(n-butyl acrylate) polymer. The provided polymer had a number average molecular weight of about 26,000 (polystyrene-equivalent value determined in the same manner as in Preparation 1) and a molecular weight distribution of 1.3. As a result of ¹H-NMR measurement, the triethoxysilyl group introduction rate into the ends was found to be about 90%.

Using a 0.5-wt.% solution of hydrochloric acid in methanol (0.24% by weight) as a catalyst, the provided triethoxysilyl group-terminated poly(n-butyl acrylate) polymer (100 parts by weight) was mixed with methanol (20 parts by weight) under stirring at 70°C for 2 hours, so that each terminal triethoxysilyl group was converted to a trimethoxysilyl group. Finally, the ethanol was removed by volatilization under reduced pressure, and thereby a trimethoxysilyl group-terminated poly(n-butyl acrylate) polymer (A-3) was provided. As a result of ¹H-NMR measurement performed in the same manner as mentioned above, the trimethoxysilyl group introduction rate into the ends was found to be 90%.

### (Preparation 7)

Propylene oxide was polymerized in the presence of polypropylene glycol as an initiator and a zinc hexacyanocobaltate glyme complex catalyst to provide a polypropylene oxide having a number average molecular weight of about 28,500 (polystyrene-equivalent value determined in the same manner as in Preparation 1). Thereto was added a methanol solution of NaOMe in an amount of 1.2 equivalents relative to the hydroxy groups of that hydroxy group-terminated polypropylene oxide, and then the methanol was distilled off. To the residue was added allyl chloride, and thereby each terminal hydroxy group was converted to an allyl group.

The provided crude allyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, an allyl group-terminated bifunctional polypropylene oxide having a number average molecular weight of about 28,500 was provided.

Using an isopropanol solution of a platinum-vinylsiloxane complex (150 ppm, platinum content: 3% by weight) as a catalyst, the provided allyl group-terminated polypropylene oxide (100 parts by weight) was reacted with triethoxysilane (1.48 parts by weight) at 90°C for 2 hours to provide a triethoxysilyl group-terminated polypropylene oxide. As a result of ¹H-NMR measurement, the triethoxysilyl group introduction rate into the ends was found to be about 78%.

Using a 0.5-wt.% solution of hydrochloric acid in methanol (0.24% by weight) as a catalyst, the provided triethoxysilyl group-terminated polypropylene oxide (100 parts by weight) was mixed with methanol (20 parts by weight) under stirring at 70°C for 2 hours, so that each terminal triethoxysilyl group was converted to a trimethoxysilyl group. Finally, the ethanol was removed by volatilization under reduced pressure, and thereby a trimethoxysilyl group-terminated polyoxypropylene polymer (A-4) was provided. As a result of ¹H-NMR measurement performed in the same manner as mentioned above, the trimethoxysilyl group introduction rate into the ends was found to be about 78%.

### (Preparation 8)

Propylene oxide was polymerized in the presence of polypropylene glycol as an initiator and a zinc hexacyanocobaltate glyme complex catalyst to provide a hydroxy group-terminated polyether oligomer having a number average molecular weight of about 37,500 (polystyrene-equivalent value determined in the same manner as in Preparation 1). Thereto was added a methanol solution of NaOMe in an amount of 1.2 equivalents relative to the hydroxy groups of the hydroxy group-terminated polyether oligomer, and then the methanol was distilled off. To the residue was added 3-chloro-2-methyl-1-propene, and thereby each terminal hydroxy group was converted to a metallyl group. The provided crude metallyl-terminated polypropylene oxide (100 parts by weight) was mixed with n-hexane (300 parts by weight) and water (300 parts by weight) under stirring, and then the water was removed by centrifugation. The resulting hexane solution was further mixed with water (300 parts by weight) under stirring, and the water was removed again by centrifugation. Thereafter, the hexane was removed by volatilization under reduced pressure. Thereby, a metallyl group-terminated bifunctional polypropylene oxide with a number average molecular weight of about 37,500 was provided.

Using sulfur (70 ppm, a 1-wt.% solution in toluene) and an isopropanol solution of a platinum-divinyldisiloxane complex (150 ppm, platinum content: 3% by weight) as catalysts, the provided metallyl group-terminated polypropylene oxide (100 parts by weight) was reacted with dimethoxymethylsilane (1.93 parts by weight) at 90°C for 5 hours to provide a methyldimethoxysilyl-terminated polyoxypropylene polymer (B-2). As a result of ¹H-NMR measurement performed in the same manner as mentioned above, the methyldimethoxysilyl group introduction rate into the ends was found to be 98%.

### (Examples 1 to 9, Comparative Examples 1 to 21)

A single polymer provided in each of Preparations 1 to 5 (A-1, A-2, B-1, C-1, and C-2) or a mixture thereof (100 parts by weight), surface-treated colloidal calcium carbonate (120 parts by weight, trade name: HAKUENKA CCR, produced by Shiraishi Kogyo Kaisha, Ltd.), a polypropylene glycol-type plasticizer with a molecular weight of 3,000 (55 parts by weight, trade name: Actcol P-23, produced by Mitsui Takeda Chemical Industries Ltd.), titanium oxide (20 parts by weight, trade name: TIPAQUE R-820, produced by Ishihara Sangyo Kaisha, Ltd.), a thixotropic agent (2 parts by weight, trade name: DISPARLON 6500, produced by Kusumoto Chemicals, Ltd.), an ultraviolet absorber (1 part by weight, trade name: TINUVIN 326, produced by Ciba Japan K.K.), and a light stabilizer (1 part by weight, trade name: SANOL LS770, produced by Sankyo Lifetech Co., Ltd.) were roughly mixed with one another by means of a spatula, and then the mixture was three times passed through a three-roll paint mill for sufficient dispersion, and thereby a base mixture was provided. To the base mixture were added vinyltrimethoxysilane (2 parts by weight, trade name: A-171, produced by GE Toshiba Silicones Co., Ltd.) as a dehydrating agent, γ-aminopropyltrimethoxysilane (3 parts by weight, trade name: A-1110, produced by GE Toshiba Silicones Co., Ltd.) as an adhesiveness-imparting agent, and dibutyltin dilaurate (0.2 parts by weight, trade name: DBDL, produced by Sankyo Co., Ltd.), or dibutyltin bis(acetylacetonate) (2 parts by weight, trade name: NEOSTANN U-220H, produced by Nitto Kasei Co., Ltd.) or 1-(o-tolyl)biguanide (6 parts by weight, trade name: NOCCELER BG, produced by Ouchi Shinko Chemical Industrial Co., Ltd.) as a silanol condensation catalyst according to the formulations shown in Tables 1 to 3. Then, the mixture was stirred and defoamed with a rotation and revolution mixer (trade name: THINKY MIXER ARE-250, produced by THINKY CORPORATION).

The above-prepared curable compositions were evaluated for their surface curability (skinning time) and the tensile properties of cured products thereof as follows.

The curable compositions of Examples 1 to 6 and Comparative Examples 1 to 10 shown in Tables 1 and 2 each contained a dibutyltin compound in an amount of less than 0.5 % by weight. The curable compositions of Comparative Examples 11 to 15 each contained a dibutyltin compound in an amount of more than 0.5% by weight. The curable compositions of Examples 7 to 9 and Comparative Examples 16 to 21 shown in Table 3 each contained no dibutyltin compound.

### (Examples 10 to 19, Comparative Examples 22 and 23)

A single polymer provided in each of Preparations 6 to 8 (A-3, A-4, and B-2) or a single commercially available trimethoxysilyl group-containing polyoxyalkylene polymer (trade name: Desmoseal S XP 2458, produced by Bayer), or a mixture thereof (100 parts by weight), surface-treated colloidal calcium carbonate (120 parts by weight, trade name: HAKUENKA CCR, produced by Shiraishi Kogyo Kaisha, Ltd.), a diisodecyl phthalate-type plasticizer (55 parts by weight, trade name: DIDP, produced by J-PLUS Co., Ltd.), titanium oxide (20 parts by weight, trade name: TIPAQUE R-820, produced by Ishihara Sangyo Kaisha, Ltd.), a thixotropic agent (2 parts by weight, trade name: DISPARLON 6500, produced by Kusumoto Chemicals, Ltd.), an ultraviolet absorber (1 part by weight, trade name: TINUVIN 326, produced by Ciba Japan K.K.), and a light stabilizer (1 part by weight, trade name: SANOL LS770, produced by Sankyo Lifetech Co., Ltd.) were roughly mixed with one another by means of a spatula, and then the mixture was three times passed through a three-roll paint mill for sufficient dispersion, and thereby a base mixture was provided. To the base mixture were added vinyltrimethoxysilane (2 parts by weight, trade name: A-171, produced by GE Toshiba Silicones Co., Ltd.) as a dehydrating agent, γ-aminopropyltrimethoxysilane (3 parts by weight, trade name: A-1110, produced by GE Toshiba Silicones Co., Ltd.) as an adhesiveness-imparting agent, and dioctyltin bis(acetylacetonate) (0.5 parts by weight, trade name: TK223, produced by TIB Chemicals), or 1,8-diazabicyclo[5.4.0]undec-7-ene (0.9 parts by weight, trade name: DBU, produced by San-Apro Ltd.), or 1-(o-tolyl)biguanide (6 parts by weight, trade name: NOCCELER BG, produced by Ouchi Shinko Chemical Industrial Co., Ltd.), or a 1-phenylguanidine solution (4.4 parts by weight) as a silanol condensation catalyst according to the formulations shown in Table 4. Then, the mixture was stirred and defoamed with a rotation and revolution mixer (trade name: THINKY MIXER ARE-250, produced by THINKY CORPORATION). Here, the 1-phenylguanidine solution was prepared by mixing 1-phenylguanidine (2 parts by weight) with n-butyl benzene sulfonamide (2.4 parts by weight, trade name: TOPCIZER No.7, produced by Fuji Amide Chemical Co., Ltd.) under stirring, and then putting the mixture in a 50°C oven for 3 hours for complete dissolution. The solution was cooled down to room temperature upon the use.

The above-prepared curable compositions were evaluated for their surface curability (skinning time) and the tensile properties of cured products thereof as follows. The curable compositions of examples and comparative examples shown in Table 4 each contained no dibutyltin compound.

### (Curability test)

The curable composition was charged in a mold having a thickness of about 5 mm with a spatula, and the surface of the charged composition was flattened. The time point at which the surface of the charged composition was flattened was defined as the start time of curing. The surface of the composition was touched by a spatula from time to time, and the time period from the start time of curing to the time when no composition was transferred to the spatula upon touching was regarded as the skinning time. The skinning time was measured at 23°C and at 50%RH.

### (Elongation properties of cured product)

The curable composition was poured into a polyethylene mold carefully so as not to form air bubbles therein. The poured composition was cured at 23°C and at 50%RH for 3 days and then at 50°C for 4 days to provide a cured sheet having a thickness of 3 mm. No. 3 dumbbell-shaped specimens were punched out from the cured sheet and subjected to tensile tests at 23°C and at 50%RH (tensile speed: 200 mm/min) so as to determine the 50% modulus, 100% modulus, strength at break, and elongation at break.

In the case where the curable compositions are used as industrial sealants, it is presumably desirable that the time period of surface curing is within 2 hours and the elongation at break is 500% or more.

Tables 1 to 4 show that the curable composition of the present invention had a good surface curability as rapid as 2 hours or shorter and the cured product thereof had a high elongation (500% or more) although it contained a dibutyltin compound in an amount of 0.5% by weight or less. Since the composition contains a smaller amount of a dibutyltin compound, it has an advantage of less influence on the environment where it is used.

The curable compositions of Comparative Examples 11 and 12 each had a time period for surface curing of shorter than 1 minute. Such a composition was not able to be formed into a flat-surface sheet sample, and it was thus impossible to correctly evaluate the tensile properties of the cured product. Such a time period for surface curing shorter than 1 minute makes it difficult to ensure sufficient working time at job sites, and thus the composition is inappropriate for use.

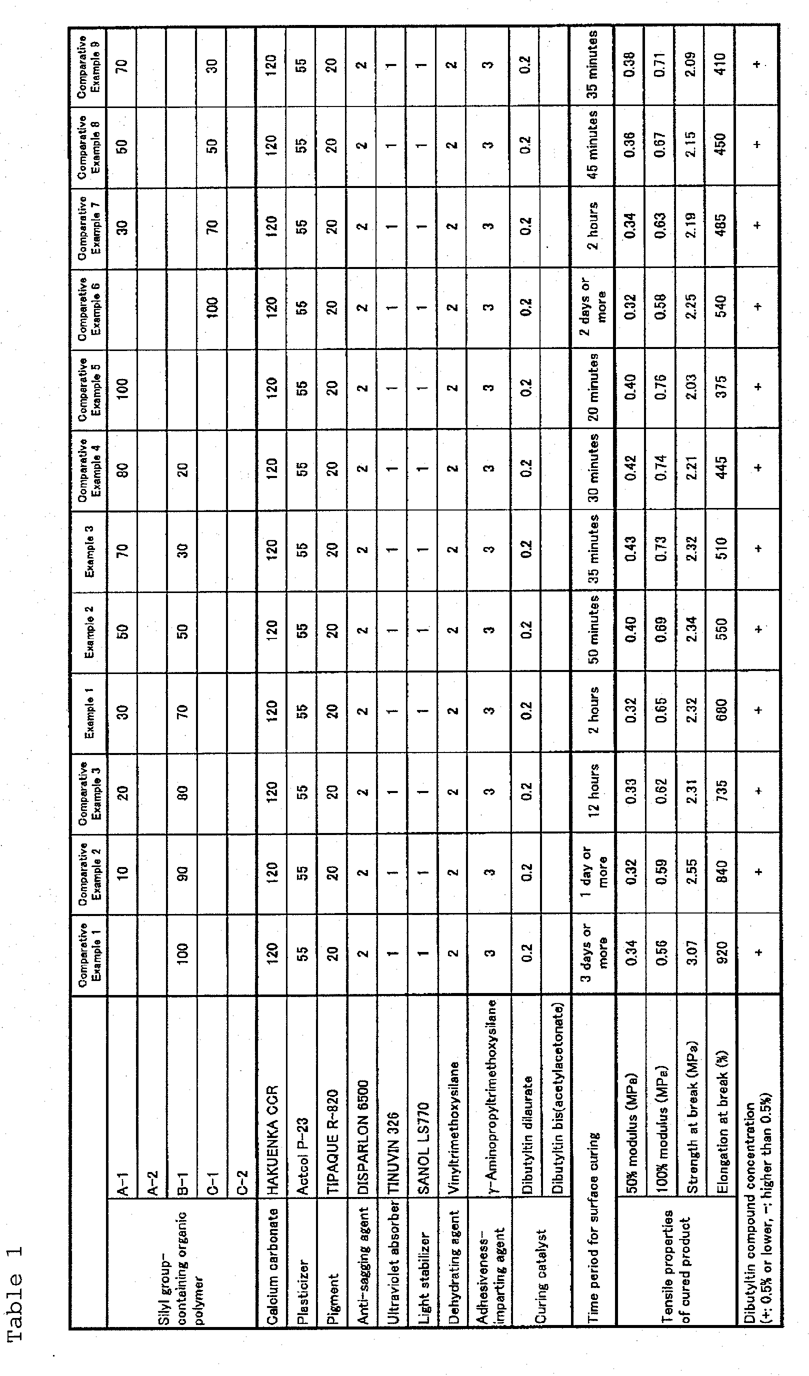

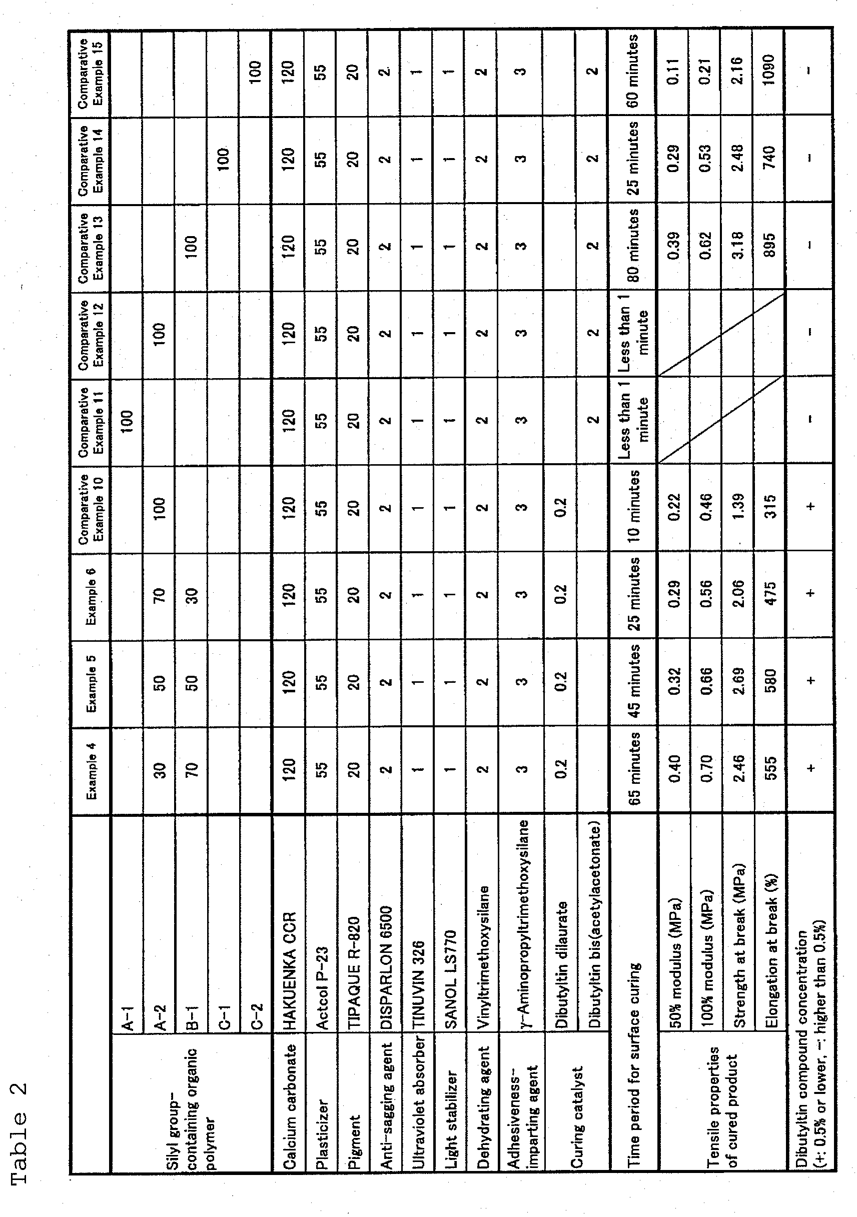

**Table 3**

| | | Comparative Example 16 | Example 7 | Example 8 | Example 9 | Comparative Example 17 | Comparative Example 18 | Comparative Example 19 | Comparative Example 20 | Comparative Example 21 |
|---|---|---|---|---|---|---|---|---|---|---|
| Silyl group- containing organic polymer | A-1 | 100 | 75 | 50 | 25 | | 75 | 50 | 25 | |
| | B-1 | | 25 | 50 | 75 | 100 | | | | |
| | C-1 | | | | | | 25 | 50 | 75 | 100 |
| Calcium carbonate | HAKUENKA CCR | 120 | 120 | 120 | 120 | 120 | 120 | 120 | 120 | 120 |
| Plasticizer | Actcol P-23 | 55 | 55 | 55 | 55 | 55 | 55 | 55 | 55 | 55 |
| Pigment | TIPAQUE R-820 | 20 | 20 | 20 | 20 | 20 | 20 | 20 | 20 | 20 |
| Anti-sagging agent | DISPARLON 6500 | 2 | 2 | 2 | 2 | 2 | 2 | 2 | 2 | 2 |
| Ultraviolet absorber | TINUVIN 326 | 1 | 1 | 1 | 1 | 1 | 1 | 1 | 1 | 1 |
| Light stabilizer | SANOL LS770 | 1 | 1 | 1 | 1 | 1 | 1 | 1 | 1 | 1 |
| Dehydrating agent | Vinyltrimethoxysilane | 2 | 2 | 2 | 2 | 2 | 2 | 2 | 2 | 2 |
| Adhesiveness-imparting agent | γ-Aminoproyltrimethoxysilane | 3 | 3 | 3 | 3 | 3 | 3 | 3 | 3 | 3 |
| Curing catalyst | 1-(o-Tolyl)biguanide | 6 | 6 | 6 | 6 | 6 | 6 | 6 | 6 | 6 |
| Time period for surface curing | | 35 minutes | 40 minutes | 60 minutes | 80 minutes | 28 hours or more | 40 minutes | 60 minutes | 80 minutes | 15 hours |
| Tensile properties of cured product | 50% modulus (MPa) | 0.37 | 0.37 | 0.37 | 0.36 | 0.40 | 0.35 | 0.35 | 0.34 | 0.34 |
| | 100% modulus (MPa) | 0.67 | 0.65 | 0.64 | 0.63 | 0.65 | 0.64 | 0.63 | 0.62 | 0.60 |
| | Strength at break (MPa) | 2.34 | 2.52 | 2.70 | 2.92 | 3.70 | 2.29 | 2.28 | 2.12 | 2.30 |
| | Elongation at break (%) | 465 | 530 | 620 | 745 | 915 | 475 | 480 | 485 | 555 |
| Dibutyltin compound concentration (+: 0.5% or lower, -: higher than 0.5%) | | + | + | + | + | + | + | + | + | + |

**Table 4**

| | | Comparative Example 22 | Example 10 | Example 11 | Example 12 | Comparative Example 23 | Example 13 | Example 14 | Example 15 | Example 16 | Example 17 | Example 18 | Example 19 |
|---|---|---|---|---|---|---|---|---|---|---|---|---|---|
| Silyl group-containing organic polymer | A-3 | 100 | 30 | | | | | | 30 | | 30 | | |
| | A-4 | | | 50 | | | 70 | | | | | 50 | |
| | Desmoseat S XP 2458 | | | | 30 | 100 | | 30 | | 30 | | | 30 |
| | B-2 | | 70 | 50 | 70 | | 30 | 70 | 70 | 70 | 70 | 50 | 70 |
| Calcium carbonate | HAKUENKA CCR | 120 | 120 | 120 | 120 | 120 | 120 | 120 | 120 | 120 | 120 | 120 | 120 |
| Plasticizer | Diisodecyl phthalate | 55 | 55 | 55 | 55 | 55 | 55 | 55 | 55 | 55 | 55 | 55 | 55 |
| Pigment | TIPAQUE R-820 | 20 | 20 | 20 | 20 | 20 | 20 | 20 | 20 | 20 | 20 | 20 | 20 |
| Anti-sagging agent | DISPARLON 6500 | 2 | 2 | 2 | 2 | 2 | 2 | 2 | 2 | 2 | 2 | 2 | 2 |
| Ultraviolet absorber | TINUVIN 326 | 1 | 1 | 1 | 1 | 1 | 1 | 1 | 1 | 1 | 1 | 1 | 1 |
| Light stabilizer | SANOL LS770 | 1 | 1 | 1 | 1 | 1 | 1 | 1 | 1 | 1 | 1 | 1 | 1 |
| Dehydrating agent | Vinyltrimethoxysilane | 2 | 2 | 2 | 2 | 2 | 2 | 2 | 2 | 2 | 2 | 2 | 2 |
| Adhesiveness-imparting agent | γ-Aminopropyltrimethoxysilane | 3 | 3 | 3 | 3 | 3 | 3 | 3 | 3 | 3 | 3 | 3 | 3 |
| Curing catalyst | Dioctyltin bis(acetylacetonate) | 0.5 | 0.5 | 0.5 | 0.5 | 0.5 | | | | | | | |
| | DBU | | | | | | 0.9 | 0.9 | | | | | |
| | 1-(o-Tolyl)biguanide | | | | | | | | 6 | 6 | | | |
| | 1-Phenylguenidine solution | | | | | | | | | | 4.4 | 4.4 | 4.4 |
| Time period for surface curing | | 10 minutes | 40 minutes | 8 minutes | 50 minutes | 18 minutes | 110 minutes | 30 minutes | 50 minutes | 30 minutes | 40 minutes | 50 minutes | 25 minutes |
| Tensile properties of cured product | 50% modulus (MPa) | 0.26 | 0.31 | 0.35 | 0.44 | 0.59 | 0.34 | 0.43 | 0.33 | 0.42 | 0.32 | 0.36 | 0.43 |
| | 100% modulus (MPa) | N/A | 0.59 | 0.56 | 0.83 | 1.02 | 0.54 | 0.74 | 0.58 | 0.76 | 0.55 | 0.57 | 0.71 |
| | Strength at break (MPa) | 0.69 | 2.51 | 2.86 | 2.93 | 1.84 | 2.53 | 2.77 | 2.83 | 2.84 | 2.71 | 2.46 | 2.72 |
| | Elongation at break (%) | 90 | 640 | 800 | 750 | 220 | 830 | 700 | 680 | 750 | 625 | 750 | 735 |
| Dibutyltin compound concentration (+: 0.5% or lower, -: higher than 0.5%) | | + | + | + | + | + | + | + | + | + | + | + | + |

### INDUSTRIAL APPLICABILITY

The curable composition of the present invention can be suitably used in various applications such as pressure-sensitive adhesives; sealants for various uses such as buildings, ships, automobiles, and roads; adhesives; impression materials; vibration-proof materials; damping materials; soundproof materials; expanded/foamed materials; coating compositions; and spray coatings. The curable composition is more desirably used in such applications as sealants and adhesives as a cured product to be provided has excellent flexibility and adhesiveness.

The curable composition of the present invention can also be used in applications such as electric and electronic part materials such as back-cover sealants for solar cells; electric insulating materials such as insulating cover materials for electric wires and cables; elastic adhesives; contact adhesives; spray sealants; crack repair materials; tiling adhesives; powder coating compositions; casting materials; rubber materials for medical use; pressure-sensitive adhesives for medical use; sealants for medical devices; food packaging materials; joint sealants for siding boards and other exterior materials; coating materials; primers; electromagnetic-wave shielding conductive materials and thermally conductive materials; hot melt materials; potting agents for electrics and electronics; films; gaskets; various molding materials; rustproof and waterproof sealants for wired glass and laminated-glass edges (cut end faces); liquid sealants for use in automotive parts, electrical machinery parts, and various machinery parts.

Further, the curable composition can also be used as various sealing compositions and adhesive compositions as it, either alone or with the aid of a primer, can adhere to a wide range of substrates such as glass, ceramics, wood, metals, and resin moldings.

The curable composition of the present invention can also be used as interior panel adhesives, exterior panel adhesives, tiling adhesives, stone pitching adhesives, ceiling finishing adhesives, floor finishing adhesives, wall finishing adhesives, vehicle panel adhesives, adhesives for assembling electric, electronic and precision apparatuses, direct glazing sealants, double glazing sealants, sealants for SSG systems, working joint sealants for buildings, and waterproof materials.

## Claims

1. A curable composition comprising the following components (A) and (B) at a weight ratio of (A)/(B) of 25/75 to 75/25,
(A) a reactive silyl group-containing organic polymer having, as a silicon-containing group cross-linkable by siloxane bond formation, a group represented by the formula (1):
-SiX₃ (1)
wherein X is a hydroxy group or a hydrolyzable group, and each of the three Xs may be the same as or different from one another; and
(B) a reactive silyl group-containing organic polymer having, as a silicon-containing group cross-linkable by siloxane bond formation, a moiety represented by the formula (2):
-O-R¹-CH(CH₃)-CH₂-Si(R²₃₋ₐ)Xₐ (2)
wherein R¹ is a C₁-C₂₀ bivalent organic group containing, as a constituent atom, at least one selected from the group consisting of hydrogen, carbon, and nitrogen;
R² is a C₁-C₂₀ alkyl group, a C₆-C₂₀ aryl group, a C₇-C₂₀ aralkyl group, or a triorganosiloxy group represented by -OSi(R')₃, wherein R' is a C₁-C₂₀ monovalent hydrocarbon group and each of the three R's may be the same as or different from one another;
X is a hydroxy group or a hydrolyzable group, and in the case two or more Xs exist, the Xs may be the same as or different from each other; and
a is 1 or 2.

2. The curable composition according to claim 1,
wherein 85% or more of terminal moieties of the organic polymer (B) are the reactive silyl groups of the formula (2).

3. The curable composition according to claim 1 or 2,
wherein the silicon-containing group of the organic polymer (A) is represented by the formula (3):
-O-R³-SiX₃ (3)
wherein R³ is a C₁-C₆ bivalent hydrocarbon group; and
X is as defined above, and each of the three Xs may be the same as or different from one another.

4. The curable composition according to claim 1 or 2,
wherein the silicon-containing group of the organic polymer (A) is represented by the formula (4):
-C(=O)-NR⁴-R³-SiX₃ (4)
wherein R³ is as defined above;
R⁴ is a C₁-C₂₀ hydrocarbon group; and
X is as defined above, and each of the three Xs may be the same as or different from one another.

5. The curable composition according to any one of claims 1 to 4,
wherein the silicon-containing group of the organic polymer (A) is located at the polymer end.

6. The curable composition according to any one of claims 1 to 5,
wherein R¹ in the formula (2) is CH₂.

7. The curable composition according to any one of claims 1 to 6,
wherein a in the formula (2) is 2.

8. The curable composition according to any one of claims 1 to 7,
wherein the organic polymer (B) contains a polyoxyalkylene and/or vinyl polymer as a main chain skeleton.

9. The curable composition according to any one of claims 1 to 8,
wherein the organic polymer (A) contains a polyoxyalkylene and/or vinyl polymer as a main chain skeleton.

10. The curable composition according to any one of claims 1 to 9,
wherein the organic polymers (A) and/or (B) contain, as a main chain skeleton, a polyoxyalkylene polymer polymerized in the presence of a double metal cyanide complex catalyst.

11. The curable composition according to any one of claims 1 to 10,
wherein the organic polymer (B) has a number average molecular weight (Mn) of 16,500 to 50,000.

12. The curable composition according to any one of claims 1 to 11, further comprising
(C) a dialkyltin compound having a C₁-C₈ alkyl group in an amount of less than 0.5% by weight to the total amount of the curable composition.

13. The curable composition according to claim 12,
wherein the dialkyltin compound (C) is a dibutyltin compound.

14. The curable composition according to claim 12,
wherein the dialkyltin compound (C) is a dioctyltin compound.

15. The curable composition according to any one of claims 1 to 14, further comprising
(D) an amidine compound in an amount of 0.1 to 5% by weight to the total amount of the curable composition.

16. The curable composition according to any one of claims 1 to 15, further comprising
(E) a silane coupling agent having an amino group.

17. The curable composition according to any one of claims 1 to 16, further comprising
(F) a colloidal calcium carbonate.

18. A sealant, which is produced from the curable composition according to any one of claims 1 to 17.

19. An adhesive, which is produced from the curable composition according to any one of claims 1 to 17.

20. A waterproof material, which is produced from the curable composition according to any one of claims 1 to 17.
